(19) **Europäisches Patentamt European Patent Office Office européen des brevets**

(11) **EP 4 761 424 A1**

(12) **EUROPEAN PATENT APPLICATION**
published in accordance with Art. 153(4) EPC

(43) Date of publication:
17.06.2026 Bulletin 2026/25

(21) Application number: 24853572.6

(22) Date of filing: 31.07.2024

(51) International Patent Classification (IPC):
*H04W 72/21* (2023.01)

(52) Cooperative Patent Classification (CPC):
H04L 5/00; H04W 72/21; H04W 72/232;
H04W 72/56

(86) International application number:
PCT/CN2024/108911

(87) International publication number:
WO 2025/036160 (20.02.2025 Gazette 2025/08)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 11.08.2023 CN 202311012656

(71) Applicant: **Datang Mobile Communications Equipment Co., Ltd.**
**Beijing 100085 (CN)**

(72) Inventors:
• LUO, Chen
  **Beijing 100085 (CN)**
• WANG, Jiaqing
  **Beijing 100085 (CN)**

(74) Representative: **Studio Torta S.p.A.**
**Via Viotti, 9**
**10121 Torino (IT)**

(54) **METHOD AND APPARATUS FOR SENDING UPLINK CONTROL SIGNALING**

(57) A method for sending uplink control signaling and an apparatus are provided. The method includes: indicating, via uplink control signaling, usages of configured grant physical uplink shared channel (CG PUSCH) transmission occasions in a CG configuration group or in at least one CG configuration; where the CG configuration group includes at least one CG configuration, and an association relationship exists among the at least one CG configuration.

indicating, via uplink control signaling, usages of CG PUSCH transmission
occasions in a CG configuration group or in at least one CG configuration; where the
CG configuration group includes the at least one CG configuration, and an
association relationship exists among the at least one CG configuration

— 100

Fig.1

**Description**

**CROSS REFERENCE OF RELATED APPLICATION**

This application claims a priority to Chinese Patent Application No. 202311012656.0 filed on August 11, 2023 and title "METHOD FOR SENDING UPLINK CONTROL SIGNALING AND APPARATUS" the disclosures of which are incorporated in their entirety by reference herein.

**FIELD**

The present disclosure relates to the field of communication technologies, and particularly to a method for sending uplink control signaling and an apparatus.

**BACKGROUND**

Multiple Type1 Configured Grants (CGs) can be configured and/or multiple Type2 CG configurations can be activated simultaneously on an active Bandwidth Part (BWP) of a serving cell.

When indicating the usage of CG Physical Uplink Shared Channel (PUSCH) transmission occasions for multiple CG configurations, the signaling overhead is relatively large.

**SUMMARY**

Embodiments of the present disclosure provide a method for sending uplink control signaling and apparatus, to address the defect of large signaling overhead in the related art and achieve reduction of Uplink Control Information (UCI) signaling overhead.

In a first aspect, an embodiment of the present disclosure provides a method for sending uplink control signaling, including:

indicating, via uplink control signaling, usages of configured grant physical uplink shared channel (CG PUSCH) transmission occasions in a CG configuration group or in at least one CG configuration;
where the CG configuration group includes at least one CG configuration, and an association relationship exists among the at least one CG configuration.

Optionally, in the method for sending uplink control signaling according to an embodiment of the present disclosure, the association relationship among the at least one CG configuration includes at least one of the following:

the at least one CG configuration is associated with a same logical channel;
the at least one CG configuration has a same priority;
the at least one CG configuration corresponds to a same Type;
CG PUSCH transmission occasions of the at least one CG configuration are within a first time window;
the at least one CG configuration corresponds to different priorities, and a priority corresponding to a CG configuration used to carry the uplink control signaling among the at least one CG configuration is higher than or equal to a priority corresponding to other CG configurations among the at least one CG configuration;
time-domain resources corresponding to a part or all of CG PUSCH transmission occasions of the at least one CG configuration partially overlap or completely overlap;
frequency-domain resources corresponding to a part or all of CG PUSCH transmission occasions of the at least one CG configuration partially overlap or completely overlap;
spatial-domain resources corresponding to a part or all of CG PUSCH transmission occasions of the at least one CG configuration partially overlap or completely overlap; or
an association relationship indicated by downlink signaling or configured by a base station.

Optionally, in the method for sending uplink control signaling according to an embodiment of the present disclosure, the indicating, via uplink control signaling, usages of CG PUSCH transmission occasions in a CG configuration group or in at least one CG configuration, includes:

indicating, via uplink control signaling, usages of CG PUSCH transmission occasions in the CG configuration group or the at least one CG configuration based on an ordering of CG PUSCH transmission occasions of the at least one CG configuration in the CG configuration group or an ordering of CG PUSCH transmission occasions of the at least one CG configuration;

where the ordering of the CG PUSCH transmission occasions of the at least one CG configuration is determined based on at least one of the following:

frequency-domain resource positions of the CG PUSCH transmission occasions of the at least one CG configuration;

time-domain resource positions of the CG PUSCH transmission occasions of the at least one CG configuration;

spatial-domain resource positions of the CG PUSCH transmission occasions of the at least one CG configuration;

an index value related to the at least one CG configuration; or

a priority corresponding to the at least one CG configuration.

Optionally, in the method for sending uplink control signaling according to an embodiment of the present disclosure, the index value related to the at least one CG configuration includes at least one of the following:

a configured grant index corresponding to the at least one CG configuration;

a Media Access Control (MAC) layer configured grant index corresponding to the at least one CG configuration;

an index of a logical channel associated with the at least one CG configuration; or

a dedicated index of the at least one CG configuration jointly indicated by the uplink control signaling.

Optionally, in the method for sending uplink control signaling according to an embodiment of the present disclosure, the indicating, via uplink control signaling, usages of CG PUSCH transmission occasions in a CG configuration group or in at least one CG configuration, includes:

indicating, via the uplink control signaling, usages of any two CG PUSCH transmission occasions whose resources overlap in the CG configuration group or in the at least one CG configuration.

Optionally, in the method for sending uplink control signaling according to an embodiment of the present disclosure, the indicating, via the uplink control signaling, usages of any two CG PUSCH transmission occasions whose resources overlap in the CG configuration group or in the at least one CG configuration, includes at least one of the following:

indicating, via the uplink control signaling, that one of the any two CG PUSCH transmission occasions whose resources overlap in the CG configuration group or in the at least one CG configuration is used or not used;

indicating, via the uplink control signaling, that a CG PUSCH transmission occasion with a lower priority among the any two CG PUSCH transmission occasions whose resources overlap in the CG configuration group or in the at least one CG configuration is used or not used, where the uplink control signaling is carried in a CG transmission corresponding to a CG PUSCH transmission occasion with a higher priority among the any two CG PUSCH transmission occasions whose resources overlap; or

indicating, via the uplink control signaling, that usages of the any two CG PUSCH transmission occasions whose resources overlap in the CG configuration group or in the at least one CG configuration are determined by a terminal.

Optionally, in the method for sending uplink control signaling according to an embodiment of the present disclosure, the indicating, via uplink control signaling, usages of CG PUSCH transmission occasions in a CG configuration group or in at least one CG configuration, includes:

indicating, via uplink control signaling, usages of CG PUSCH transmission occasions in the CG configuration group or the at least one CG configuration based on configuration information sent by a network-side device and/or based on protocol-predefined information;

where the configuration information is used to configure related information of at least one of: the uplink control signaling, the CG configuration group, the at least one CG configuration, or the CG PUSCH transmission occasions.

Optionally, in the method for sending uplink control signaling according to an embodiment of the present disclosure, the configuration information includes at least one of the following:

a plurality of CG configurations, where the plurality of CG configurations include at least one CG configuration in the CG configuration group or the at least one CG configuration;

a CG configuration carrying the uplink control signaling;

an uplink control signaling enabling variable, where the uplink control signaling enabling variable is used to characterize whether the uplink control signaling is carried on a CG PUSCH of a CG configuration associated with the uplink control signaling;

at least one CG configuration jointly indicated by the uplink control signaling;

a first time window indicated by the uplink control signaling;

a quantity or a maximum quantity of CG PUSCH transmission occasions of at least one CG configuration jointly indicated by the uplink control signaling;

an uplink control signaling joint indication identifier, where the uplink control signaling joint indication identifier is used to characterize whether a CG configuration where the uplink control signaling joint indication identifier is located supports uplink control signaling joint indication;

first indication information, where the first indication information is used to indicate that the uplink control signaling indicates usages of CG PUSCH transmission occasions of a first type of CG configuration, and the first type includes Type 1 CG and/or Type 2 CG;

second indication information, where the second indication information is used to indicate that the uplink control signaling indicates usages of CG PUSCH transmission occasions of CG configurations associated with a same logical channel;

third indication information, where the third indication information is used to indicate related information of CG PUSCH transmission occasions whose usages are indicated by the uplink control signaling; or

a priority corresponding to the at least one CG configuration.

Optionally, in the method for sending uplink control signaling according to an embodiment of the present disclosure, the related information of the CG PUSCH transmission occasions whose usages are indicated by the uplink control signaling indicates at least one of the following:

that time-domain resources of the CG PUSCH transmission occasions overlap;

that frequency-domain resources of the CG PUSCH transmission occasions overlap; or

that spatial-domain resources of the CG PUSCH transmission occasions overlap.

Optionally, in the method for sending uplink control signaling according to an embodiment of the present disclosure, the protocol-predefined information includes at least one of the following:

a priority corresponding to at least one CG configuration to which the CG PUSCH transmission occasions whose usages are indicated by the uplink control signaling belong;

the uplink control signaling indicating usages of CG PUSCH transmission occasions of a specified CG configuration;

the uplink control signaling being used to indicate usages of CG PUSCH transmission occasions of a first type of CG configuration, where the first type includes Type 1 CG and/or Type 2 CG;

the uplink control signaling being used to indicate usages of CG PUSCH transmission occasions of CG configurations associated with a same logical channel;

the uplink control signaling being used to indicate usages of CG PUSCH transmission occasions whose time-domain resources overlap;

the uplink control signaling being used to indicate usages of CG PUSCH transmission occasions whose frequency-domain resources overlap; or

the uplink control signaling being used to indicate usages of CG PUSCH transmission occasions whose spatial-domain resources overlap.

Optionally, in the method for sending uplink control signaling according to an embodiment of the present disclosure, the priority corresponding to the at least one CG configuration includes:

a physical layer priority of the at least one CG configuration;

a priority of a logical channel associated with the at least one CG configuration;

a dedicated priority of the uplink control signaling; or

a dedicated priority of CG configurations jointly indicated by the uplink control signaling.

In a second aspect, an embodiment of the present disclosure further provides a method for sending uplink control signaling, applied to a network-side device, including:

sending uplink control signaling to a terminal;

where the uplink control signaling is used to indicate usages of CG PUSCH transmission occasions in a CG configuration group or in at least one CG configuration; the CG configuration group includes the at least one CG configuration, and an association relationship exists among the at least one CG configuration.

Optionally, the association relationship among the at least one CG configuration includes at least one of the following:

the at least one CG configuration is associated with a same logical channel;
the at least one CG configuration has a same priority;
the at least one CG configuration corresponds to a same Type;
CG PUSCH transmission occasions of the at least one CG configuration are within a first time window;
the at least one CG configuration corresponds to different priorities, and a priority corresponding to a CG configuration used to carry the uplink control signaling among the at least one CG configuration is higher than or equal to a priority corresponding to other CG configurations among the at least one CG configuration;
time-domain resources corresponding to a part or all of CG PUSCH transmission occasions of the at least one CG configuration partially overlap or completely overlap;
frequency-domain resources corresponding to a part or all of CG PUSCH transmission occasions of the at least one CG configuration partially overlap or completely overlap;
spatial-domain resources corresponding to a part or all of CG PUSCH transmission occasions of the at least one CG configuration partially overlap or completely overlap; or
an association relationship indicated by downlink signaling or configured by a base station.

Optionally, in the method for sending uplink control signaling according to an embodiment of the present disclosure, the uplink control signaling being used to indicate usages of CG PUSCH transmission occasions in a CG configuration group or in at least one CG configuration, includes:

the uplink control signaling being used to indicate usages of CG PUSCH transmission occasions in the CG configuration group or the at least one CG configuration based on an ordering of CG PUSCH transmission occasions of the at least one CG configuration in the CG configuration group or an ordering of CG PUSCH transmission occasions of the at least one CG configuration;
where the ordering of the CG PUSCH transmission occasions of the at least one CG configuration is determined based on at least one of the following:
frequency-domain resource positions of the CG PUSCH transmission occasions of the at least one CG configuration;
time-domain resource positions of the CG PUSCH transmission occasions of the at least one CG configuration;
spatial-domain resource positions of the CG PUSCH transmission occasions of the at least one CG configuration;
an index value related to the at least one CG configuration; or
a priority corresponding to the at least one CG configuration.

Optionally, in the method for sending uplink control signaling according to an embodiment of the present disclosure, the index value related to the at least one CG configuration includes at least one of the following:
a configured grant index corresponding to the at least one CG configuration;
a Media Access Control (MAC) layer configured grant index corresponding to the at least one CG configuration;
an index of a logical channel associated with the at least one CG configuration; or
a dedicated index of the at least one CG configuration jointly indicated by the uplink control signaling.

Optionally, in the method for sending uplink control signaling according to an embodiment of the present disclosure, the uplink control signaling being used to indicate usages of CG PUSCH transmission occasions in a CG configuration group or in at least one CG configuration, includes:
the uplink control signaling being used to indicate usages of any two CG PUSCH transmission occasions whose resources overlap in the CG configuration group or in the at least one CG configuration.

Optionally, in the method for sending uplink control signaling according to an embodiment of the present disclosure, the uplink control signaling being used to indicate usages of any two CG PUSCH transmission occasions whose resources overlap in the CG configuration group or in the at least one CG configuration, includes at least one of the following:

the uplink control signaling being used to indicate that one of the any two CG PUSCH transmission occasions whose resources overlap in the CG configuration group or in the at least one CG configuration is used or not used;
the uplink control signaling being used to indicate that a CG PUSCH transmission occasion with a lower priority among the any two CG PUSCH transmission occasions whose resources overlap in the CG configuration group or in the at least one CG configuration is used or not used, where the uplink control signaling is carried in a CG transmission corresponding to a CG PUSCH transmission occasion with a higher priority among the any two CG PUSCH transmission occasions whose resources overlap; or

the uplink control signaling being used to indicate that usages of the any two CG PUSCH transmission occasions whose resources overlap in the CG configuration group or in the at least one CG configuration are determined by a terminal.

Optionally, in the method for sending uplink control signaling according to an embodiment of the present disclosure, the method further includes:

sending configuration information to the terminal, where the configuration information is used to configure related information of at least one of: the uplink control signaling, the CG configuration group, the at least one CG configuration, or the CG PUSCH transmission occasions; where the configuration information is used to indicate usages of CG PUSCH transmission occasions in the CG configuration group or the at least one CG configuration.

Optionally, in the method for sending uplink control signaling according to an embodiment of the present disclosure, the configuration information includes at least one of the following:

a plurality of CG configurations, where the plurality of CG configurations include at least one CG configuration in the CG configuration group or the at least one CG configuration;

a CG configuration carrying the uplink control signaling;

an uplink control signaling enabling variable, where the uplink control signaling enabling variable is used to characterize whether the uplink control signaling is carried on a CG PUSCH of a CG configuration associated with the uplink control signaling;

at least one CG configuration jointly indicated by the uplink control signaling;

a first time window indicated by the uplink control signaling;

a quantity or a maximum quantity of CG PUSCH transmission occasions of at least one CG configuration jointly indicated by the uplink control signaling;

an uplink control signaling joint indication identifier, where the uplink control signaling joint indication identifier is used to characterize whether a CG configuration where the uplink control signaling joint indication identifier is located supports uplink control signaling joint indication;

first indication information, where the first indication information is used to indicate that the uplink control signaling indicates usages of CG PUSCH transmission occasions of a first type of CG configuration, and the first type includes Type 1 CG and/or Type 2 CG;

second indication information, where the second indication information is used to indicate that the uplink control signaling indicates usages of CG PUSCH transmission occasions of CG configurations associated with a same logical channel;

third indication information, where the third indication information is used to indicate related information of CG PUSCH transmission occasions whose usages are indicated by the uplink control signaling; or

a priority corresponding to the at least one CG configuration.

Optionally, in the method for sending uplink control signaling according to an embodiment of the present disclosure, the related information of the CG PUSCH transmission occasions whose usages are indicated by the uplink control signaling indicates at least one of the following:

that time-domain resources of the CG PUSCH transmission occasions overlap;

that frequency-domain resources of the CG PUSCH transmission occasions overlap; or

that spatial-domain resources of the CG PUSCH transmission occasions overlap.

Optionally, in the method for sending uplink control signaling according to an embodiment of the present disclosure, the priority corresponding to the at least one CG configuration includes:

a physical layer priority of the at least one CG configuration;

a priority of a logical channel associated with the at least one CG configuration;

a dedicated priority of the uplink control signaling; or

a dedicated priority of CG configurations jointly indicated by the uplink control signaling.

In a third aspect, an embodiment of the present disclosure further provides a terminal, including a memory, a transceiver, and a processor, where

the memory is configured to store a computer program; the transceiver is configured to send and receive data under control of the processor; the processor is configured to read the computer program from the memory and implement the steps of the method for sending uplink control signaling according to the first aspect described above.

In a fourth aspect, an embodiment of the present disclosure further provides a network-side device, including a memory, a transceiver, and a processor, where:

the memory is configured to store a computer program; the transceiver is configured to send and receive data under control of the processor; the processor is configured to read the computer program from the memory and implement the steps of the method for sending uplink control signaling according to the second aspect described above.

In a fifth aspect, an embodiment of the present disclosure further provides an apparatus for sending uplink control signaling, including:

an indicating module, configured to indicate, via uplink control signaling, usages of configured grant physical uplink shared channel (CG PUSCH) transmission occasions in a CG configuration group or in at least one CG configuration; where the CG configuration group includes the at least one CG configuration, and an association relationship exists among the at least one CG configuration.

In a sixth aspect, an embodiment of the present disclosure further provides an apparatus for sending uplink control signaling, including:

a sending module, configured to send uplink control signaling to a terminal; where the uplink control signaling is used to indicate usages of CG PUSCH transmission occasions in a CG configuration group or in at least one CG configuration; the CG configuration group includes the at least one CG configuration, and an association relationship exists among the at least one CG configuration.

In a seventh aspect, an embodiment of the present disclosure further provides a processor-readable storage medium, where the processor-readable storage medium stores a computer program, and the computer program is used to cause a processor to execute the steps of the method for sending uplink control signaling according to the first aspect.

In an eighth aspect, an embodiment of the present disclosure further provides a processor-readable storage medium, where the processor-readable storage medium stores a computer program, and the computer program is used to cause a processor to execute the steps of the method for sending uplink control signaling according to the second aspect.

According to the method for sending uplink control signaling and an apparatus provided in the embodiments of the present disclosure, usages of CG PUSCH transmission occasions in at least one CG configuration having an association relationship is indicated via uplink control signaling, thereby reducing UCI signaling overhead.

## BRIEF DESCRIPTION OF THE DRAWINGS

In order to more clearly illustrate the technical solutions in the embodiments of the present disclosure or the related art, the drawings used in the embodiments or the description of the related art will be briefly introduced below. Obviously, the drawings in the following description are some embodiments of the present disclosure. For those of ordinary skill in the art, other drawings can also be obtained from these drawings without creative effort.

FIG. 1 is a first schematic flowchart of a method for sending uplink control signaling provided by an embodiment of the present disclosure;

FIG. 2 is a first schematic diagram of CG transmission occasion ordering provided by an embodiment of the present disclosure;

FIG. 3 is a second schematic diagram of CG transmission occasion ordering provided by an embodiment of the present disclosure;

FIG. 4 is a third schematic diagram of CG transmission occasion ordering provided by an embodiment of the present disclosure;

FIG. 5 is a fourth schematic diagram of CG transmission occasion ordering provided by an embodiment of the present disclosure;

FIG. 6 is a first schematic diagram of UCI indication provided by an embodiment of the present disclosure;

FIG. 7 is a second schematic flowchart of a method for sending uplink control signaling provided by an embodiment of the present disclosure;

FIG. 8 is a schematic structural diagram of a terminal provided by an embodiment of the present disclosure;

FIG. 9 is a schematic structural diagram of a network-side device provided by an embodiment of the present disclosure;

FIG. 10 is a first schematic structural diagram of an apparatus for sending uplink control signaling provided by an embodiment of the present disclosure; and

FIG. 11 is a second schematic structural diagram of an apparatus for sending uplink control signaling provided by an embodiment of the present disclosure.

## DETAILED DESCRIPTION

The term "and/or" in the embodiments of the present disclosure describes an association relationship of associated objects, indicating that three relationships may exist. For example, A and/or B may indicate: A exists alone, both A and B exist, or B exists alone. The character "/" generally indicates an "or" relationship between the associated objects before and after it.

The term "a plurality of" in the embodiments of the present disclosure refers to two or more, and other quantifiers are similar.

First, the following content is introduced:

(1) XR service characteristics:

eXtended Reality (XR) is one of the most important media applications in 5G, with Augmented Reality (AR), Mixed Reality (MR), and Virtual Reality (VR) as representative forms. It creates a combined environment of real and virtual through computer technology and wearable devices, along with related human-computer interaction. The degree of virtuality from AR to VR increases from weak to strong, i.e., from AR where sensors partially perceive input to VR with a fully virtual human sensory presence, providing "illusions" of human vision, hearing, or environment through XR devices.

According to research on XR services in the related art, XR services have approximately periodic transmission characteristics, meaning that the XR service source generates corresponding data packets at a certain refresh rate. For example: a refresh rate of 60 frames per second (60 FPS) means 60 data frames are generated per second, with a time interval of 16.67 milliseconds between data frames. A refresh rate of 120 frames per second (120 FPS) means 120 data frames are generated per second, with a time interval of 8.33 milliseconds between data frames.

For downlink XR service video streams, after each frame of XR service source data packet is generated, it goes through encoding, network routing, and other links to reach the base station side. In the above links, due to different data packet sizes and network congestion conditions, the arrival of service source data packets at the base station side may have different degrees of delay jitter, and this delay jitter has a certain randomness. Therefore, video streams in downlink XR services have quasi-periodic characteristics in transmission time. According to Standalone 4 (SA4)'s collection of video data streams for downlink VR/Cloud Game (CG) services, it can be seen that variable-rate video streams have data packet sizes and delay jitter that follow the characteristics of a truncated Gaussian distribution.

For uplink XR service video streams, after each frame of XR service source data packet is generated, source encoding also produces a certain delay jitter. For uplink control/attitude and other data, because their data packets are small, the differences caused by source encoding are not significant, and the delay jitter when reaching the terminal's Medium Access Control (MAC) layer or physical layer can be ignored. For uplink video stream data packets, because the data packet size varies greatly, they have a certain delay jitter when reaching the terminal's MAC layer or physical layer. Unlike downlink XR service video streams, the range of their delay jitter is relatively small.

(2) CG transmission;

There are two types of uplink CG transmission:

Type 1 CG: Relevant transmission information of the CG is configured via Radio Resource Control (RRC) signaling;
Type 2 CG: Relevant transmission information of the CG is indicated via Physical Downlink Control Channel (PDCCH), including activation and deactivation of the CG, both of which are indicated based on L1 signaling.

Type1 CG and Type2 CG are configured per Bandwidth Part (BWP). Multiple CG configurations on the same BWP can be activated simultaneously. The activation and deactivation processes of Type2 CG are independent of each other. For the same BWP, the MAC layer can configure both Type1 CG and Type2 CG simultaneously.

For Type1 CG, the timing (symbol) of the Nth uplink Grant is:

(SFN $\times$ numberOfSlotsPerFrame $\times$ numberOfSymbolsPerSlot) + (slot number in the frame $\times$ numberOfSymbolsPerSlot) + symbol number in the slot] = (timeReferenceSFN $\times$ numberOfSlotsPerFrame $\times$ numberOfSymbolsPerSlot + timeDomainOffset $\times$ numberOfSymbolsPerSlot + S + N $\times$ periodicity) modulo(1024 $\times$ numberOfSlotsPerFrame $\times$ numberOfSymbolsPerSlot)

For Type 2 CG, the timing (symbol) of the Nth uplink Grant is:

[(SFN × numberOfSlotsPerFrame × numberOfSymbolsPerSlot) + (slot number in the frame × numberOfSymbolsPerSlot) + symbol number in the slot] = [(SFNstart time × numberOfSlotsPerFrame × numberOfSymbolsPerSlot + slotstart time × numberOfSymbolsPerSlot + symbolstart time) + N × periodicity] modulo (1024 × numberOfSlotsPerFrame × numberOfSymbolsPerSlot)

where SFNstart time, slotstart time, and symbolstart time are the System Frame Number (SFN), slot, and symbol of the first PUSCH transmission opportunity for CG initialization. The correspondence for Type1 CG and Type2 CG regarding transmission opportunities is as above.

Multiple Type1 CGs can be configured and/or multiple Type2 CG configurations can be activated simultaneously on an active BWP of a serving cell.

From the perspective of CG transmission configuration, classification can be made from the following situations:

(1) Type-1 CG and Type-2 CG, which are CG transmissions configured via RRC and activated/deactivated via DCI, respectively.

(2) CG transmissions associated with the same logical channel, i.e., a CG configuration list associated via allowedCG-List in LCH configuration.

(3) CG transmissions associated with different logical channels, i.e., CG transmissions associated via different LCH configurations. If logical channel priorities are configured, then CG transmission configurations associated with different logical channels have corresponding priorities.

(4) Used only for Type-1 CG transmission, i.e., the data transmission's LCH has configuredGrantType1Allowed set to true.

(5) CG PUSCH carrying UTO-UCI and CG PUSCH not carrying UTO-UCI (legacy CG transmission).

The embodiments of the present disclosure provide a method for sending uplink control signaling and apparatus to reduce UCI signaling overhead.

The method and apparatus are based on the same inventive concept. Since the principles for solving problems by the method and apparatus are similar, the implementation of the apparatus and the method can be cross-referenced, and repeated descriptions are omitted.

The technical solutions in the embodiments of the present disclosure will be described clearly and completely below with reference to the drawings in the embodiments of the present disclosure. Obviously, the described embodiments are only some, not all, embodiments of the present disclosure. All other embodiments obtained by those of ordinary skill in the art based on the embodiments of the present disclosure without creative effort shall fall within the protection scope of the present disclosure.

The technical solutions provided by the embodiments of the present disclosure can be applied to various systems, especially 5G systems. For example, applicable systems may be a Global System for Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an LTE Frequency Division Duplex (FDD) system, an LTE Time Division Duplex (TDD) system, an advanced Long Term Evolution (LTE-A) system, a Universal Mobile Telecommunication System (UMTS), a Worldwide Interoperability for Microwave Access (WiMAX) system, a 5G New Radio (NR) system, etc. These various systems all include terminal devices and network devices. The systems may also include a core network part, such as an Evolved Packet System (EPS), a 5G System (5GS), etc.

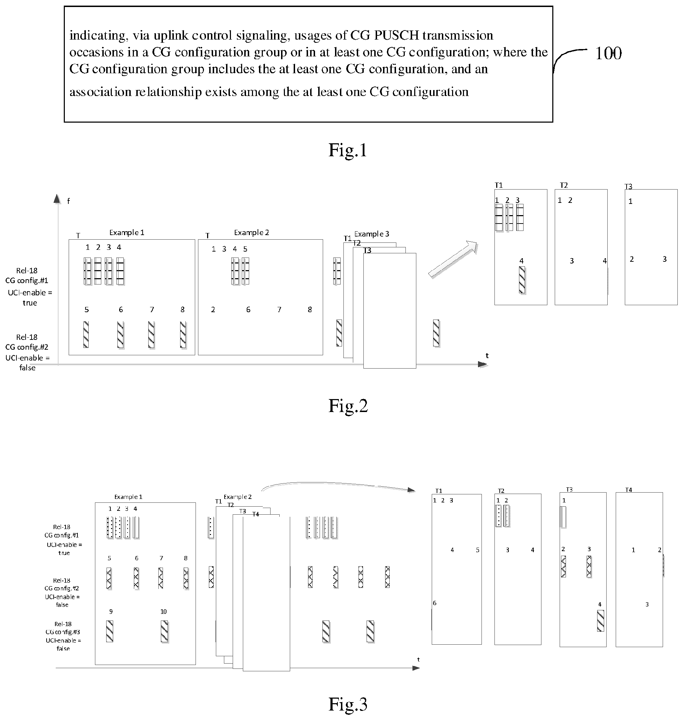

FIG. 1 is a first schematic flowchart of a method for sending uplink control signaling provided by an embodiment of the present disclosure. As shown in FIG. 1, the method for sending uplink control signaling is applied to a terminal, i.e., the execution subject of the method for sending uplink control signaling is a terminal. The method includes the following steps:

Step 100: indicating, via uplink control signaling, usages of configured grant physical uplink shared channel (CG PUSCH) transmission occasions in a CG configuration group or in at least one CG configuration;

where the CG configuration group includes the at least one CG configuration, and an association relationship exists among the at least one CG configuration.

Optionally, the usages of CG PUSCH transmission occasions include "used" and/or "not used".

Specifically, in some communication scenarios, a network-side device may simultaneously configure at least one set of CG configurations, such as one or more Type1 CGs and/or activate one or more Type2 CG configurations, where an association relationship exists among at least one CG configuration. Then, via uplink control signaling, the usages of CG PUSCH transmission occasions in the at least one CG configuration having an association relationship can be indicated together to save UCI signaling overhead; the terminal can also provide the base station with more information related to the usage of CG transmission opportunities to improve system resource reuse rate.

Specifically, in some communication scenarios, one or more Type1 CGs may be configured and/or one or more Type2 CG configurations may be activated simultaneously, where an association relationship exists among at least one CG configuration. The at least one CG configuration having an association relationship can be confirmed as a CG configuration group or a group of CG configurations. Then, via uplink control signaling, the usages of CG PUSCH transmission occasions in this CG configuration group or group of CG configurations can be indicated together to save UCI signaling overhead; the terminal can also provide the base station with more information related to the usage of CG transmission opportunities to improve system resource reuse rate.

For example, a network-side device configures a terminal with multiple CG configurations, and the terminal carries indication information about CG PUSCH transmission occasion usages via uplink control signaling, indicating, among the multiple CG configurations, the usages of CG PUSCH transmission occasions in one or more CG configurations or a group of CG configurations that meet certain restriction conditions within a specific time window.

Optionally, the uplink control signaling used to indicate usages of CG PUSCH transmission occasions in a CG configuration group or in at least one CG configuration may be abbreviated as UTO-UCI (UCI that provides information about unused CG PUSCH transmission occasions).

Optionally, if the terminal has not yet received data arrival and cannot predict the situation of data packet arrival size, it may indicate the corresponding CG PUSCH transmission opportunity as "used". The terminal can then indicate the usages of subsequent nearby CG PUSCH transmission opportunities based on the data packet arrival situation.

The embodiments of the present disclosure design a scheme for indicating, via UCI, the usages of CG PUSCH transmission occasions in at least one CG configuration, which can further reduce UCI signaling overhead.

The method for sending uplink control signaling provided in the embodiments of the present disclosure indicates, via uplink control signaling, the usages of CG PUSCH transmission occasions in at least one CG configuration having an association relationship, which can reduce UCI signaling overhead.

Optionally, the association relationship among the at least one CG configuration includes at least one of the following:

(a1) the at least one CG configuration is associated with a same logical channel;
(a2) the at least one CG configuration has a same priority;
(a3) the at least one CG configuration corresponds to a same Type;
(a4) CG PUSCH transmission occasions of the at least one CG configuration are within a first time window;
(a5) the at least one CG configuration corresponds to different priorities, and a priority corresponding to a CG configuration used to carry the uplink control signaling among the at least one CG configuration is higher than or equal to a priority corresponding to other CG configurations among the at least one CG configuration;
(a6) time-domain resources corresponding to a part or all of CG PUSCH transmission occasions of the at least one CG configuration partially overlap or completely overlap;
(a7) frequency-domain resources corresponding to a part or all of CG PUSCH transmission occasions of the at least one CG configuration partially overlap or completely overlap;
(a8) spatial-domain resources corresponding to a part or all of CG PUSCH transmission occasions of the at least one CG configuration partially overlap or completely overlap; or
(a9) an association relationship indicated by downlink signaling or configured by a base station.

Optionally, the usages of CG PUSCH transmission occasions in at least one CG configuration associated with a same logical channel can be indicated via uplink control signaling (e.g., UTO-UCI);

Optionally, the usages of CG PUSCH transmission occasions in at least one CG configuration having a same priority can be indicated via uplink control signaling (e.g., UTO-UCI);
Optionally, the usages of CG PUSCH transmission occasions in at least one CG configuration corresponding to a same Type can be indicated via uplink control signaling (e.g., UTO-UCI);
for example, UTO-UCI can indicate the usages of CG PUSCH transmission occasions of CGs of the same type, such as indicating the usages of CG PUSCH transmission occasions of Type 1 CG, or indicating the usages of CG PUSCH transmission occasions of Type2 CG.
Optionally, the usages of CG PUSCH transmission occasions in at least one CG configuration associated with a same logical channel within a first time window can be indicated via uplink control signaling (e.g., UTO-UCI);
Optionally, the usages of CG PUSCH transmission occasions in at least one CG configuration having a same priority within a first time window can be indicated via uplink control signaling (e.g., UTO-UCI);
Optionally, the usages of CG PUSCH transmission occasions in at least one CG configuration corresponding to a same Type within a first time window can be indicated via uplink control signaling (e.g., UTO-UCI);
Optionally, the usages of CG PUSCH transmission occasions in at least one CG configuration within a first time window can be indicated via uplink control signaling (e.g., UTO-UCI);

for example, UTO-UCI can indicate legacy CG transmission opportunities within a specific time window.

Optionally, the usages of CG PUSCH transmission occasions in at least one CG configuration corresponding to overlapping time-domain resources can be indicated via uplink control signaling (e.g., UTO-UCI);

Optionally, among the CG PUSCH transmission occasions whose usages are indicated via uplink control signaling (e.g., UTO-UCI), resources (one or more of time-domain, frequency-domain, or spatial-domain) corresponding to a part or all of the CG transmission opportunities partially overlap or completely overlap.

Optionally, the usages of CG PUSCH transmission occasions in at least one CG configuration corresponding to overlapping time-domain resources can be indicated via uplink control signaling (e.g., UTO-UCI);

Optionally, the usages of CG PUSCH transmission occasions in at least one CG configuration corresponding to overlapping frequency-domain resources can be indicated via uplink control signaling (e.g., UTO-UCI);

Optionally, the usages of CG PUSCH transmission occasions in at least one CG configuration corresponding to overlapping spatial-domain resources can be indicated via uplink control signaling (e.g., UTO-UCI);

Optionally, the usages of CG PUSCH transmission occasions in at least one CG configuration corresponding to overlapping time-domain resources within a first time window can be indicated via uplink control signaling (e.g., UTO-UCI);

Optionally, the usages of CG PUSCH transmission occasions in at least one CG configuration corresponding to overlapping frequency-domain resources within a first time window can be indicated via uplink control signaling (e.g., UTO-UCI);

Optionally, the usages of CG PUSCH transmission occasions in at least one CG configuration corresponding to overlapping spatial-domain resources within a first time window can be indicated via uplink control signaling (e.g., UTO-UCI);

Optionally, the association relationship among the at least one CG configuration to which the CG PUSCH transmission occasions whose usages are indicated via uplink control signaling (e.g., UTO-UCI) belong may be indicated by downlink signaling, configured by a base station, configured by higher-layer signaling, or defined by protocol.

Optionally, the at least one CG configuration to which the CG PUSCH transmission occasions whose usages are indicated via uplink control signaling (e.g., UTO-UCI) belong may correspond to different priorities, where the priority corresponding to the CG configuration used to carry the uplink control signaling is higher than or equal to the priorities corresponding to other CG configurations;

for example, there may be pre-indicated, configured, or predefined priorities, such as: PHY priority, where UTO-UCI carried on a high-priority CG indicates the usages of CG PUSCH transmission occasions in low-priority CG configurations within a specific time window (e.g., the first time window).

Optionally, the at least one CG configuration to which the CG PUSCH transmission occasions whose usages are indicated via uplink control signaling (e.g., UTO-UCI) belong may correspond to different priorities, where the priority corresponding to the CG configuration used to carry the uplink control signaling is lower than or equal to the priorities corresponding to other CG configurations.

Optionally, the at least one CG configuration to which the CG PUSCH transmission occasions whose usages are indicated via uplink control signaling (e.g., UTO-UCI) belong may correspond to different priorities, where the priority corresponding to the CG configuration used to carry the uplink control signaling is a preset priority.

Optionally, the association relationship among the at least one CG configuration to which the CG PUSCH transmission occasions whose usages are indicated via uplink control signaling (e.g., UTO-UCI) belong may satisfy any one or any combination of (a1)-(a9), which will not be listed one by one.

Optionally, the indicating, via uplink control signaling, usages of CG PUSCH transmission occasions in a CG configuration group or in at least one CG configuration, includes:

indicating, via uplink control signaling, usages of CG PUSCH transmission occasions in the CG configuration group or the at least one CG configuration based on an ordering of CG PUSCH transmission occasions of the at least one CG configuration in the CG configuration group or an ordering of CG PUSCH transmission occasions of the at least one CG configuration;

where the ordering of the CG PUSCH transmission occasions of the at least one CG configuration is determined based on at least one of the following:

(b1) frequency-domain resource positions of the CG PUSCH transmission occasions of the at least one CG configuration;

(b2) time-domain resource positions of the CG PUSCH transmission occasions of the at least one CG configuration;

(b3) spatial-domain resource positions of the CG PUSCH transmission occasions of the at least one CG configuration;

(b4) an index value related to the at least one CG configuration; or

(b5) a priority corresponding to the at least one CG configuration.

Specifically, the terminal can indicate, via uplink control signaling (e.g., UTO-UCI), the usages of CG PUSCH transmission occasions of each CG configuration among the at least one CG configuration after sorting the at least one CG configuration according to a first rule.

For example, the terminal can indicate, via UTO-UCI, the usages of each CG PUSCH transmission opportunity after sorting the CG PUSCH transmission opportunities within a specific time window (e.g., the first time window) according to a first rule.

Optionally, the terminal can sort the at least one CG configuration based on ascending or descending order of frequency-domain resource positions, and then indicate, via uplink control signaling (e.g., UTO-UCI), based on the ordering, the usages of CG PUSCH transmission occasions of each CG configuration among the at least one CG configuration;

Optionally, the terminal can sort the at least one CG configuration based on ascending or descending order of time-domain resource positions, and then indicate, via uplink control signaling (e.g., UTO-UCI), based on the ordering, the usages of CG PUSCH transmission occasions of each CG configuration among the at least one CG configuration;

Optionally, the terminal can sort the at least one CG configuration based on ascending or descending order of frequency-domain resource positions, and then indicate, via uplink control signaling (e.g., UTO-UCI), based on the ordering, the usages of CG PUSCH transmission occasions of each CG configuration among the at least one CG configuration;

Optionally, the terminal can sort the at least one CG configuration based on ascending or descending order of spatial-domain resource positions, and then indicate, via uplink control signaling (e.g., UTO-UCI), based on the ordering, the usages of CG PUSCH transmission occasions of each CG configuration among the at least one CG configuration;

Optionally, the terminal can sort the at least one CG configuration based on ascending or descending order of index values, and then indicate, via uplink control signaling (e.g., UTO-UCI), based on the ordering, the usages of CG PUSCH transmission occasions of each CG configuration among the at least one CG configuration;

Optionally, the terminal can sort the at least one CG configuration based on ascending or descending order of priorities, and then indicate, via uplink control signaling (e.g., UTO-UCI), based on the ordering, the usages of CG PUSCH transmission occasions of each CG configuration among the at least one CG configuration;

Optionally, the terminal can sort the at least one CG configuration based on any one or any combination of (b1)-(b5), and then indicate, via uplink control signaling (e.g., UTO-UCI), based on the ordering, the usages of CG PUSCH transmission occasions of each CG configuration among the at least one CG configuration, which will not be listed one by one.

For example, the terminal can, according to base station configuration and/or protocol definition, sort the CG PUSCH transmission occasions of the at least one CG configuration included in the time window indicated by UTO-UCI (e.g., the first time window) according to a first rule. The first rule includes one or several of the following reference factors:

Frequency-domain resources, such as: a starting position of a Resource Block Group (RBG) of a CG configuration, an ending position of an RBG of a CG configuration, a frequency-domain resource size, a starting position of a frequency-domain resource, an ending position of a frequency-domain resource;

Time-domain resources, such as: a starting position of a time unit where a CG PUSCH transmission occasion is located, an ending position of a time unit where a CG PUSCH is located, a duration of a time unit where a CG PUSCH transmission occasion is located, etc.; here, the time unit can be a slot, symbol, millisecond, etc.

Spatial-domain resources, such as: an antenna port where a CG PUSCH transmission occasion is located, an associated Transmission Configuration Indication (TCI) state, etc.;

ConfiguredGrantConfigindex corresponding to a CG configuration configured by higher-layer signaling;

configuredGrantConfigIndexMAC index at the MAC layer;

physical layer priority P0 or P1 of a CG configuration;

priority of a logical channel associated with a CG configuration;

dedicated priority of CG configurations jointly indicated by UTO-UCI.

In one embodiment, the terminal can sort the at least one CG configuration based on time-domain, frequency-domain, and index value (e.g., CG configuration index, or CG configuration order), e.g., first sorting based on time-domain position, then sorting based on frequency-domain position, then further sorting based on CG configuration index. That is:

first sort CG transmission opportunities on different time domains at a certain frequency point, then sort according to frequency-domain order. For CG PUSCH transmission occasions with overlapping frequency domains, they are arranged in chronological order. If CG PUSCH transmission occasions have overlapping time domains, they can be arranged in ascending or descending order of CG configuration index.

In one embodiment, the terminal can sort the at least one CG configuration based on time-domain and frequency-domain, e.g., first soring based on frequency-domain position, then soring based on time-domain position e.g., first sorting based on time-domain position, e.g., sorting CG PUSCH transmission occasions on different frequency-domain resources in one slot, then sorting CG PUSCH transmission occasions on different time-domain resource positions, e.g., sorting CG PUSCH transmission occasions on different slots. For CG PUSCH transmission occasions with overlapping time domains, they are arranged in the order of frequency-domain resources. The frequency-domain resources here can be one or more of a BWP starting position, an RBG starting position, an RBG ending position, or an RBG size.

In one embodiment, UCI indicates the usages of CG PUSCH transmission occasions within a specific window (e.g., the first time window), where the window is a sliding time window. Within this window, CG PUSCH transmission occasions can be sorted by first sorting based on frequency-domain position, then based on time-domain position.

In one embodiment, UCI indicates the usages of CG PUSCH transmission occasions within a specific window (e.g., the first time window). For CG PUSCH transmission occasions with overlapping frequency-domain and/or time-domain resources, they can select the antenna port same as the CG PUSCH transmission occasion where UTO-UCI is located, or arranged in the order of antenna ports.

Optionally, the index value related to the at least one CG configuration includes at least one of the following:

a configured grant index corresponding to the at least one CG configuration;
a Media Access Control (MAC) layer configured grant index corresponding to the at least one CG configuration;
an index of a logical channel associated with the at least one CG configuration; or
a dedicated index of at least one CG configuration jointly indicated by the uplink control signaling.

Optionally, the terminal can sort the at least one CG configuration based on an index value related to the at least one CG configuration, and then indicate, via uplink control signaling (e.g., UTO-UCI), based on the ordering, the usages of CG PUSCH transmission occasions of each CG configuration among the at least one CG configuration. The index value related to the at least one CG configuration is any one or any combination of: a configured grant index corresponding to the at least one CG configuration, or a Media Access Control (MAC) layer configured grant index corresponding to the at least one CG configuration, or an index of a logical channel associated with the at least one CG configuration, or a joint indication index of at least one CG configuration jointly indicated by the uplink control signaling;

Optionally, the terminal can sort the at least one CG configuration in descending or ascending order based on the configured grant index corresponding to the at least one CG configuration, and then indicate, via uplink control signaling (e.g., UTO-UCI), based on the ordering, the usages of CG PUSCH transmission occasions of each CG configuration among the at least one CG configuration;
Optionally, the terminal can sort the at least one CG configuration in descending or ascending order based on the Media Access Control (MAC) layer configured grant index corresponding to the at least one CG configuration, and then indicate, via uplink control signaling (e.g., UTO-UCI), based on the ordering, the usages of CG PUSCH transmission occasions of each CG configuration among the at least one CG configuration;
Optionally, the terminal can sort the at least one CG configuration in descending or ascending order based on the index of a logical channel associated with the at least one CG configuration, and then indicate, via uplink control signaling (e.g., UTO-UCI), based on the ordering, the usages of CG PUSCH transmission occasions of each CG configuration among the at least one CG configuration;
Optionally, the terminal can sort the at least one CG configuration in descending or ascending order based on the joint indication index of at least one CG configuration jointly indicated by the uplink control signaling, and then indicate, via uplink control signaling (e.g., UTO-UCI), based on the ordering, the usages of CG PUSCH transmission occasions of each CG configuration among the at least one CG configuration;
In one embodiment, the terminal can sort based on the order of at least one CG configuration, i.e., first sort CG configurations whose UTO-UCI enabling variable is "1" or "true", then sort CG configurations whose UTO-UCI enabling variable is "0" or "false". Here, the specific window can be a fixed window, corresponding to a window of a specific time length; or the specific window can be a sliding window, i.e., a fixed-size window after the CG PUSCH; or the specific window can correspond to a specific number of CG transmission opportunities.

In one embodiment, for multiple CG configurations whose UTO-UCI enabling variable is "1" or "true", they are arranged in ascending or descending order of CG configuration index.

It should be noted that the terminal carries uplink control signaling via a CG PUSCH with data transmission to indicate CG PUSCH transmission occasions of at least one CG configuration within the first time window. For different sorting methods, the information field size carried by the uplink control signaling may be different. In the uplink control signaling indication, "0" may indicate that the transmission opportunity is used, and "1" may indicate that the transmission opportunity is not used;

For example, the information field size carried by the uplink control signaling can be the total number of all indicated CG PUSCH transmission occasions within a fixed time window (e.g., the first time window), or the maximum number of all indicated CG PUSCH transmission occasions. Here, the CG PUSCH transmission occasions can be configured CG PUSCH transmission occasions, or they can be valid CG PUSCH transmission occasions, i.e., CG PUSCH transmission occasions that can be used for uplink transmission. For CG PUSCH transmission occasions conflicting with downlink symbols, they may not be usable for uplink transmission, so such CG PUSCH transmission occasions can be considered invalid. If the terminal supports duplex transmission, then CG PUSCH transmission occasions conflicting with downlink symbols can be used for uplink transmission, so such CG PUSCH transmission occasions can be considered valid.

The structure of the information field carried by the uplink control signaling is one or a combination of the following:

Method 1: {Usage of CG transmission occasions corresponding to frequency-domain set 1, ..., usage of CG transmission occasions corresponding to frequency-domain set N}.
Method 2: {Usage of CG transmission occasions corresponding to time-domain set 1, ..., usage of CG transmission occasions corresponding to time-domain set N};
Method 3: {Usage of a maximum number of CG PUSCH transmission occasions within configuration window 1, ..., usage of a maximum number of CG PUSCH transmission occasions within configuration window N};

For example: When using a sliding window indication, the number of CG PUSCH transmission occasions in each window indicated by UCI may change. The base station can configure the maximum number of CG PUSCH transmission occasions per window. Within the window, indication can be further performed in the order of frequency-domain, time-domain, spatial-domain, etc., for example, first frequency-domain then time-domain order.

Method 4: {Usage of CG transmission occasions corresponding to CG configuration 1, ..., usage of CG transmission occasions corresponding to CG configuration N};
Optionally, the indicating, via uplink control signaling, usages of CG PUSCH transmission occasions in a CG configuration group or in at least one CG configuration, includes:
indicating, via the uplink control signaling, usages of any two CG PUSCH transmission occasions whose resources overlap in the CG configuration group or in the at least one CG configuration.

Specifically, among the CG PUSCH transmission occasions whose usages are indicated by the terminal via uplink control signaling (e.g., UTO-UCI), resources (one or more of time-domain, frequency-domain, or spatial-domain) corresponding to a part or all of the CG transmission opportunities partially overlap or completely overlap.

Optionally, the indicating, via the uplink control signaling, usages of any two CG PUSCH transmission occasions whose resources overlap in the CG configuration group or in the at least one CG configuration, includes at least one of the following:

indicating, via the uplink control signaling, that one of the any two CG PUSCH transmission occasions whose resources overlap in the CG configuration group or in the at least one CG configuration is used or not used;
indicating, via the uplink control signaling, that a CG PUSCH transmission occasion with a lower priority among the any two CG PUSCH transmission occasions whose resources overlap in the CG configuration group or in the at least one CG configuration is used or not used, where the uplink control signaling is carried in a CG transmission corresponding to a CG PUSCH transmission occasion with a higher priority among the any two CG PUSCH transmission occasions whose resources overlap;
indicating, via the uplink control signaling, that usages of the any two CG PUSCH transmission occasions whose resources overlap in the CG configuration group or in the at least one CG configuration are determined by a terminal.

Specifically, among the CG PUSCH transmission occasions whose usages are indicated by the terminal via uplink control signaling (e.g., UTO-UCI), resources (one or more of time-domain, frequency-domain, or spatial-domain) corresponding to a part or all of the CG transmission opportunities partially overlap or completely overlap;

For any two CG PUSCH transmission occasions whose resources overlap, the usage of one of them can be indicated as used or not used;
For any two CG PUSCH transmission occasions whose resources overlap, the usage of the CG PUSCH transmission occasion with a higher priority can be indicated as not used;

For any two CG PUSCH transmission occasions whose resources overlap, the usage of the CG PUSCH transmission occasion with a lower priority can be indicated as used;

For any two CG PUSCH transmission occasions whose resources overlap, the usage of the CG PUSCH transmission occasion with a higher priority can be indicated as used;

For any two CG PUSCH transmission occasions whose resources overlap, the usage of the CG PUSCH transmission occasion with a lower priority can be indicated as not used;

For any two CG PUSCH transmission occasions whose resources overlap, the usage of the CG PUSCH transmission occasion with a higher priority can be indicated as not used, and the usage of the CG PUSCH transmission occasion with a lower priority can be indicated as used;

For any two CG PUSCH transmission occasions whose resources overlap, the usage of the CG PUSCH transmission occasion with a higher priority can be indicated as used, and the usage of the CG PUSCH transmission occasion with a lower priority can be indicated as not used;

For any two CG PUSCH transmission occasions whose resources overlap, UTO-UCI carried by the CG with a higher priority can be used to indicate the usage of CG PUSCH transmission occasions in the CG configuration with a lower priority, for example, indicating it as used;

For any two CG PUSCH transmission occasions whose resources overlap, UTO-UCI carried by the CG with a higher priority can be used to indicate the usage of CG PUSCH transmission occasions in the CG configuration with a lower priority, for example, indicating it as not used;

For any two CG PUSCH transmission occasions whose resources overlap, if the two have the same priority, the indication can be based on the actual usage of these two resource-overlapping CG PUSCH transmission occasions.

In one embodiment, within the first time window, when different CG PUSCHs conflict, or when UCI indication information in different CG transmissions conflicts, or when CG PUSCH and UCI indication information in CG transmission conflict, transmission can be performed according to a second rule. The second rule specifically includes one or more of the following:

When a CG PUSCH transmission occasion with a higher "priority" is indicated as "not used", a CG PUSCH transmission occasion with a lower "priority" that overlaps with it in resources can be indicated as "used".

When a CG PUSCH transmission occasion with a higher "priority" is indicated as "used", a CG PUSCH transmission occasion with a lower "priority" that overlaps with it in resources can be indicated as "not used".

When a CG PUSCH transmission occasion with a higher "priority" is indicated as "used", and a CG PUSCH transmission occasion with a lower "priority" that overlaps with it in resources is indicated as "not used", subsequent CG PUSCH transmission occasions with a lower "priority" can be indicated as "used".

For CG PUSCH transmission occasions with equal "priority", the terminal can indicate the usage of the corresponding CG PUSCH transmission occasions via UCI.

For CG PUSCH transmission occasions with equal "priority", the terminal can indicate the usage of the corresponding CG PUSCH transmission occasions via UCI based on signaling indication or configuration information from the base station.

Optionally, the indicating, via uplink control signaling, usages of CG PUSCH transmission occasions in a CG configuration group or in at least one CG configuration, includes:

indicating, via uplink control signaling, usages of CG PUSCH transmission occasions in the CG configuration group or the at least one CG configuration based on configuration information sent by a network-side device and/or based on protocol-predefined information;

where the configuration information is used to configure related information of at least one of: the uplink control signaling, the CG configuration group, the at least one CG configuration, or the CG PUSCH transmission occasions.

Optionally, the base station can configure multiple sets of CG configurations for the terminal, including at least one CG configuration, which can carry indication of CG PUSCH transmission occasion usage, i.e., used or not used; the terminal can also determine and indicate a scheme for indicating the usages of CG PUSCH transmission occasions of at least one CG configuration among the multiple sets of CG configurations based on configuration information sent by the network-side device and/or based on protocol-predefined information.

Optionally, the configuration information includes at least one of the following:

(c1) a plurality of CG configurations, where the plurality of CG configurations include at least one CG configuration in the CG configuration group or the at least one CG configuration;

(c2) a CG configuration carrying the uplink control signaling;

(c3) an uplink control signaling enabling variable, where the uplink control signaling enabling variable is used to characterize whether the uplink control signaling is carried on a CG PUSCH of a CG configuration associated with the uplink control signaling;

(c4) at least one CG configuration jointly indicated by the uplink control signaling;

(c5) a first time window indicated by the uplink control signaling;

(c6) a quantity or a maximum quantity of CG PUSCH transmission occasions of at least one CG configuration jointly indicated by the uplink control signaling;

(c7) an uplink control signaling joint indication identifier, where the uplink control signaling joint indication identifier is used to characterize whether a CG configuration where the uplink control signaling joint indication identifier is located supports uplink control signaling joint indication;

(c8) first indication information, where the first indication information is used to indicate that the uplink control signaling indicates usages of CG PUSCH transmission occasions of a first type of CG configuration, and the first type includes Type 1 CG and/or Type 2 CG;

(c9) second indication information, where the second indication information is used to indicate that the uplink control signaling indicates usages of CG PUSCH transmission occasions of CG configurations associated with a same logical channel;

(c10) third indication information, where the third indication information is used to indicate related information of CG PUSCH transmission occasions whose usages are indicated by the uplink control signaling; or

(c11) a priority corresponding to the at least one CG configuration.

Optionally, the configuration information sent by the network-side device to the terminal may include multiple CG configurations, and the terminal may indicate the usages of CG PUSCH transmission occasions of the CG configuration group or at least one CG configuration included in the multiple CG configurations;

for example, the network-side device configures CG1, CG2, and CG3 for the terminal; then the multiple CG configurations include CG1, CG2, and CG3; the CG configuration group or at least one CG configuration to which the CG PUSCH transmission occasions whose usages are indicated by the terminal belong may include only CG1, or CG2, or CG1, or may include CG1 and CG3, or CG2 and CG3, or CG1 and CG2, or may include CG1, CG2, and CG3.

The above CG1, CG2, and CG3 are Type-1 CG and/or Type-2 CG.

Optionally, the network-side device can configure for the terminal a CG configuration allowed to carry the uplink control signaling;

Optionally, the network-side device configures a first time window for the terminal, which may include one or a combination of a starting position, duration, ending position, etc. of the first time window.

Optionally, the network-side device can configure for the terminal any one or any combination of (c1)-(c11), which will not be listed one by one.

Optionally, the terminal can determine and indicate a scheme for indicating the usages of CG PUSCH transmission occasions of at least one CG configuration among multiple sets of CG configurations based on any one or any combination of (c1)-(c11) and/or protocol-predefined information.

In one embodiment, the base station configures UTO-UCI for the terminal via configuration information, i.e., configures related configurations for the terminal regarding UTO-UCI indicating the usages of CG transmission occasions of at least one CG configuration, including one or more of the following:

CG configuration carrying UTO-UCI;

UTO-UCI enabling variable, i.e., whether the current CG transmission carries UTO-UCI;

at least one CG configuration indicated by UTO-UCI, i.e., CG configurations jointly indicated by UTO-UCI;

a first time window indicated by UTO-UCI, where the first time window can be a fixed time window, a sliding time window, a fixed number of CG PUSCH transmission occasions, or a fixed number of time units;

a quantity or maximum quantity of CG PUSCH transmission occasions of at least one CG configuration jointly indicated by UTO-UCI;

UTO-UCI joint indication identifier, i.e., whether the current CG configuration supports UTO-UCI joint indication; or

a group of CG configurations indicated by UTO-UCI, where higher-layer signaling configures a group of CG configurations.

Optionally, the related information of the CG PUSCH transmission occasions whose usages are indicated by the uplink control signaling indicates at least one of the following:

that time-domain resources of the CG PUSCH transmission occasions overlap;

that frequency-domain resources of the CG PUSCH transmission occasions overlap; or

that spatial-domain resources of the CG PUSCH transmission occasions overlap.

Optionally, the related information of the CG PUSCH transmission occasions whose usages are indicated by the uplink control signaling can be indicated by one piece of indication information, i.e., the third indication information; Optionally, the related information of the CG PUSCH transmission occasions whose usages are indicated by the uplink control signaling can be indicated by three pieces of indication information, i.e., three sub-indication information included in the third indication information, respectively indicating the usages of CG PUSCH transmission occasions whose time-domain resource overlaps, frequency-domain resource overlaps, and spatial-domain resource overlaps.

Optionally, the protocol-predefined information includes at least one of the following:

(d1) a priority corresponding to at least one CG configuration to which the CG PUSCH transmission occasions whose usages are indicated by the uplink control signaling belong;

(d2) the uplink control signaling indicating usages of CG PUSCH transmission occasions of a specified CG configuration;

(d3) the uplink control signaling being used to indicate usages of CG PUSCH transmission occasions of a first type of CG configuration, where the first type includes Type 1 CG and/or Type 2 CG;

(d4) the uplink control signaling being used to indicate usages of CG PUSCH transmission occasions of CG configurations associated with a same logical channel;

(d5) the uplink control signaling being used to indicate usages of CG PUSCH transmission occasions whose time-domain resources overlap;

(d6) the uplink control signaling being used to indicate usages of CG PUSCH transmission occasions whose frequency-domain resources overlap; or

(d7) the uplink control signaling being used to indicate usages of CG PUSCH transmission occasions whose spatial-domain resources overlap.

Optionally, the protocol-predefined information may include any one or any combination of (d1)-(d7); Optionally, the terminal can determine and indicate a scheme for indicating the usages of CG PUSCH transmission occasions of at least one CG configuration among multiple sets of CG configurations based on any one or any combination of (d1)-(d7) and/or configuration information.

In one embodiment, the protocol can define the at least one CG configuration jointly indicated by UTO-UCI, i.e., the protocol-predefined information can:

configure PHY priority, where UTO-UCI carried on a high-priority CG indicates the usages of low-priority CGs within a specific time window;

UTO-UCI can indicate legacy CG transmission opportunities within a specific time window;

can indicate CGs of the same type, such as Type 1 CG or Type2 CG;

indicate CG transmissions associated with the same LCH;

indicate the usages of CG transmission opportunities whose time/frequency/spatial-domain resources overlap.

Optionally, the priority corresponding to the at least one CG configuration includes:

a physical layer priority of the at least one CG configuration;

a priority of a logical channel associated with the at least one CG configuration;

a dedicated priority of the uplink control signaling; or

a dedicated priority of CG configurations jointly indicated by the uplink control signaling.

Optionally, the dedicated priority of the uplink control signaling is a priority configured by the base station for UTO-UCI. When multiple UTO-UCIs on PUCCH or PUSCH have resource overlapping, the terminal sends the UTO-UCI with a higher priority, or the terminal sends UTO-UCIs in order of priority, or sends the high-priority UTO-UCI first, and if there is remaining resource, then sends the low-priority UTO-UCI; otherwise, does not send the low-priority UTO-UCI.

Optionally, the dedicated priority of the CG configuration associated with the uplink control signaling is a priority configured by the base station for multiple CG configurations within at least one CG configuration or a CG configuration group. For example: UTO-UCI can jointly indicate the usages of CG PUSCH transmission occasions under CG configuration #1, CG configuration #2, and CG configuration #3. The priority order of these three CG configurations is: CG configuration #2 > CG configuration #1 > CG configuration #3.

The priority of the at least one CG configuration involved in the embodiments of the present disclosure may be a physical layer priority, or a priority of an associated logical channel, or a dedicated priority of the uplink control signaling, or a dedicated priority of CG configurations jointly indicated by the uplink control signaling.

The embodiments of the present disclosure can further carry, via UCI, information about the usages of CG PUSCH transmission occasions in other CG configurations, dynamically feedback their usage, reduce signaling overhead, and the base station can recycle unused CG PUSCH transmission opportunities and allocate them to other users.

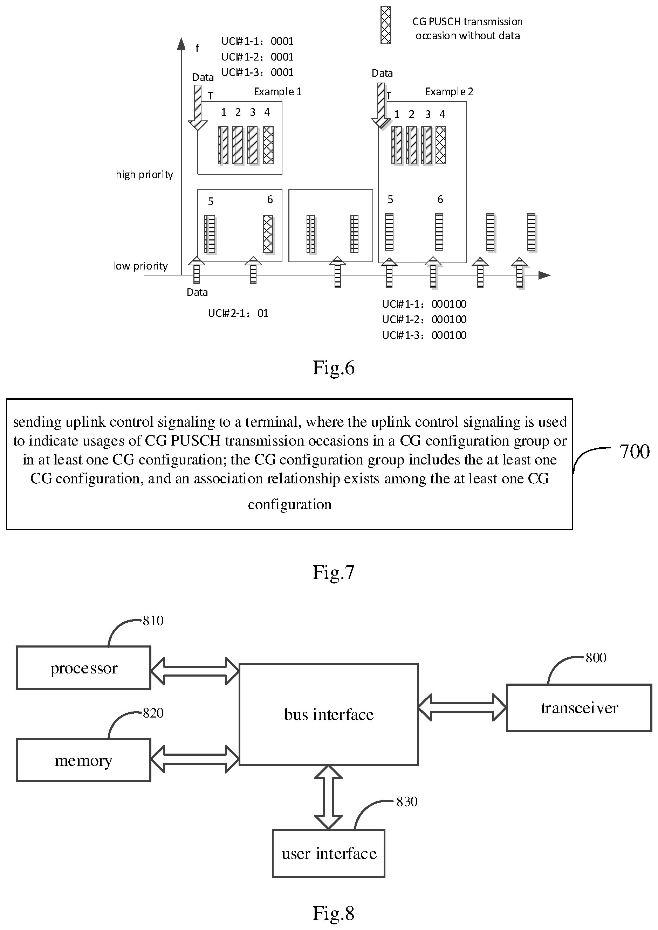

FIG. 7 is a second schematic flowchart of a method for sending uplink control signaling provided by an embodiment of the present disclosure. As shown in FIG. 7, the present disclosure provides a method for sending uplink control signaling. Its execution subject may be a network-side device. The method includes:

Step 700: sending uplink control signaling to a terminal;
where the uplink control signaling is used to indicate usages of CG PUSCH transmission occasions in a CG configuration group or in at least one CG configuration; the CG configuration group includes the at least one CG configuration, and an association relationship exists among the at least one CG configuration.

Optionally, the usages of CG PUSCH transmission occasions include "used" and/or "not used".

Specifically, in some communication scenarios, a network-side device may simultaneously configure at least one set of CG configurations, such as one or more Type1 CGs and/or activate one or more Type2 CG configurations, where an association relationship exists among at least one CG configuration. Then, via uplink control signaling, the usages of CG PUSCH transmission occasions in the at least one CG configuration having an association relationship can be indicated together to save UCI signaling overhead.

Specifically, in some communication scenarios, one or more Type1 CGs may be configured and/or one or more Type2 CG configurations may be activated simultaneously, where an association relationship exists among at least one CG configuration. The at least one CG configuration having an association relationship can be confirmed as a CG configuration group or a group of CG configurations. Then, via uplink control signaling, the usages of CG PUSCH transmission occasions in this CG configuration group or group of CG configurations can be indicated together to save UCI signaling overhead.

For example, a network-side device configures a terminal with multiple CG configurations, and the terminal carries indication information about CG PUSCH transmission occasion usages via uplink control signaling, indicating, among the multiple CG configurations, the usages of CG PUSCH transmission occasions in one or more CG configurations or a group of CG configurations that meet certain restriction conditions within a specific time window.

Optionally, the uplink control signaling used to indicate usages of CG PUSCH transmission occasions in a CG configuration group or in at least one CG configuration may be abbreviated as UTO-UCI (UCI that provides information about unused CG PUSCH transmission occasions).

Compared with the related art where only the usage of CG PUSCH transmission occasions in a CG configuration is indicated via UCI, such as: transmission opportunity is unused or used, the embodiments of the present disclosure design a scheme for indicating, via UCI, the usages of CG PUSCH transmission occasions in at least one CG configuration, which can further reduce UCI signaling overhead.

The method for sending uplink control signaling provided in the embodiments of the present disclosure indicates, via uplink control signaling, the usages of CG PUSCH transmission occasions in at least one CG configuration having an association relationship, which can reduce UCI signaling overhead.

Optionally, the association relationship among the at least one CG configuration includes at least one of the following:

(a1) the at least one CG configuration is associated with a same logical channel;
(a2) the at least one CG configuration has a same priority;
(a3) the at least one CG configuration corresponds to a same Type;
(a4) CG PUSCH transmission occasions of the at least one CG configuration are within a first time window;
(a5) the at least one CG configuration corresponds to different priorities, and a priority corresponding to a CG configuration used to carry the uplink control signaling among the at least one CG configuration is higher than or equal to a priority corresponding to other CG configurations among the at least one CG configuration;
(a6) time-domain resources corresponding to a part or all of CG PUSCH transmission occasions of the at least one CG configuration partially overlap or completely overlap;
(a7) frequency-domain resources corresponding to a part or all of CG PUSCH transmission occasions of the at least one CG configuration partially overlap or completely overlap;
(a8) spatial-domain resources corresponding to a part or all of CG PUSCH transmission occasions of the at least one CG configuration partially overlap or completely overlap; or
(a9) an association relationship indicated by downlink signaling or configured by a base station.

Optionally, the usages of CG PUSCH transmission occasions in at least one CG configuration associated with a same logical channel can be indicated via uplink control signaling (e.g., UTO-UCI);

Optionally, the usages of CG PUSCH transmission occasions in at least one CG configuration having a same priority can be indicated via uplink control signaling (e.g., UTO-UCI);

Optionally, the usages of CG PUSCH transmission occasions in at least one CG configuration corresponding to a same Type can be indicated via uplink control signaling (e.g., UTO-UCI);
for example, UTO-UCI can indicate the usages of CG PUSCH transmission occasions of CGs of the same type, such as indicating the usages of CG PUSCH transmission occasions of Type 1 CG, or indicating the usages of CG PUSCH transmission occasions of Type2 CG.

Optionally, the usages of CG PUSCH transmission occasions in at least one CG configuration associated with a same logical channel within a first time window can be indicated via uplink control signaling (e.g., UTO-UCI);

Optionally, the usages of CG PUSCH transmission occasions in at least one CG configuration having a same priority within a first time window can be indicated via uplink control signaling (e.g., UTO-UCI);
Optionally, the usages of CG PUSCH transmission occasions in at least one CG configuration corresponding to a same Type within a first time window can be indicated via uplink control signaling (e.g., UTO-UCI);
Optionally, the usages of CG PUSCH transmission occasions in at least one CG configuration within a first time window can be indicated via uplink control signaling (e.g., UTO-UCI);
for example, UTO-UCI can indicate legacy CG transmission opportunities within a specific time window.

Optionally, the usages of CG PUSCH transmission occasions in at least one CG configuration corresponding to overlapping time-domain resources can be indicated via uplink control signaling (e.g., UTO-UCI);
Optionally, among the CG PUSCH transmission occasions whose usages are indicated via uplink control signaling (e.g., UTO-UCI), resources (one or more of time-domain, frequency-domain, or spatial-domain) corresponding to a part or all of the CG transmission opportunities partially overlap or completely overlap.

Optionally, the usages of CG PUSCH transmission occasions in at least one CG configuration corresponding to overlapping time-domain resources can be indicated via uplink control signaling (e.g., UTO-UCI);
Optionally, the usages of CG PUSCH transmission occasions in at least one CG configuration corresponding to overlapping frequency-domain resources can be indicated via uplink control signaling (e.g., UTO-UCI);
Optionally, the usages of CG PUSCH transmission occasions in at least one CG configuration corresponding to overlapping spatial-domain resources can be indicated via uplink control signaling (e.g., UTO-UCI);
Optionally, the usages of CG PUSCH transmission occasions in at least one CG configuration corresponding to overlapping time-domain resources within a first time window can be indicated via uplink control signaling (e.g., UTO-UCI);
Optionally, the usages of CG PUSCH transmission occasions in at least one CG configuration corresponding to overlapping frequency-domain resources within a first time window can be indicated via uplink control signaling (e.g., UTO-UCI);
Optionally, the usages of CG PUSCH transmission occasions in at least one CG configuration corresponding to overlapping spatial-domain resources within a first time window can be indicated via uplink control signaling (e.g., UTO-UCI);
Optionally, the association relationship among the at least one CG configuration to which the CG PUSCH transmission occasions whose usages are indicated via uplink control signaling (e.g., UTO-UCI) belong may be indicated by downlink signaling, configured by a base station, configured by higher-layer signaling, or defined by protocol.

Optionally, the at least one CG configuration to which the CG PUSCH transmission occasions whose usages are indicated via uplink control signaling (e.g., UTO-UCI) belong may correspond to different priorities, where the priority corresponding to the CG configuration used to carry the uplink control signaling is higher than or equal to the priorities corresponding to other CG configurations;
for example, there may be pre-indicated, configured, or predefined priorities, such as: PHY priority, where UTO-UCI carried on a high-priority CG indicates the usages of CG PUSCH transmission occasions in low-priority CG configurations within a specific time window (e.g., the first time window).
Optionally, the at least one CG configuration to which the CG PUSCH transmission occasions whose usages are indicated via uplink control signaling (e.g., UTO-UCI) belong may correspond to different priorities, where the priority corresponding to the CG configuration used to carry the uplink control signaling is lower than or equal to the priorities corresponding to other CG configurations.
Optionally, the at least one CG configuration to which the CG PUSCH transmission occasions whose usages are indicated via uplink control signaling (e.g., UTO-UCI) belong may correspond to different priorities, where the priority corresponding to the CG configuration used to carry the uplink control signaling is a preset priority.
Optionally, the association relationship among the at least one CG configuration to which the CG PUSCH transmission occasions whose usages are indicated via uplink control signaling (e.g., UTO-UCI) belong may satisfy any one or any combination of (a1)-(a9), which will not be listed one by one.

Optionally, the uplink control signaling being used to indicate usages of CG PUSCH transmission occasions in a CG configuration group or in at least one CG configuration, includes:

the uplink control signaling being used to indicate usages of CG PUSCH transmission occasions in the CG configuration group or the at least one CG configuration based on an ordering of CG PUSCH transmission occasions of the at least one CG configuration in the CG configuration group or an ordering of CG PUSCH transmission occasions of the at least one CG configuration;

where the ordering of the CG PUSCH transmission occasions of the at least one CG configuration is determined based on at least one of the following:

(b1) frequency-domain resource positions of the CG PUSCH transmission occasions of the at least one CG configuration;
(b2) time-domain resource positions of the CG PUSCH transmission occasions of the at least one CG configuration;
(b3) spatial-domain resource positions of the CG PUSCH transmission occasions of the at least one CG configuration;
(b4) an index value related to the at least one CG configuration; or
(b5) a priority corresponding to the at least one CG configuration.

Specifically, the terminal can indicate, via uplink control signaling (e.g., UTO-UCI), the usages of CG PUSCH transmission occasions of each CG configuration among the at least one CG configuration after sorting the at least one CG configuration according to a first rule.

For example, the terminal can indicate, via UTO-UCI, the usages of each CG PUSCH transmission opportunity after sorting the CG PUSCH transmission opportunities within a specific time window (e.g., the first time window) according to a first rule.

Optionally, the terminal can sort the at least one CG configuration based on ascending or descending order of frequency-domain resource positions, and then indicate, via uplink control signaling (e.g., UTO-UCI), based on the ordering, the usages of CG PUSCH transmission occasions of each CG configuration among the at least one CG configuration;

Optionally, the terminal can sort the at least one CG configuration based on ascending or descending order of time-domain resource positions, and then indicate, via uplink control signaling (e.g., UTO-UCI), based on the ordering, the usages of CG PUSCH transmission occasions of each CG configuration among the at least one CG configuration;

Optionally, the terminal can sort the at least one CG configuration based on ascending or descending order of frequency-domain resource positions, and then indicate, via uplink control signaling (e.g., UTO-UCI), based on the ordering, the usages of CG PUSCH transmission occasions of each CG configuration among the at least one CG configuration;

Optionally, the terminal can sort the at least one CG configuration based on ascending or descending order of spatial-domain resource positions, and then indicate, via uplink control signaling (e.g., UTO-UCI), based on the ordering, the usages of CG PUSCH transmission occasions of each CG configuration among the at least one CG configuration;

Optionally, the terminal can sort the at least one CG configuration based on ascending or descending order of index values, and then indicate, via uplink control signaling (e.g., UTO-UCI), based on the ordering, the usages of CG PUSCH transmission occasions of each CG configuration among the at least one CG configuration;

Optionally, the terminal can sort the at least one CG configuration based on ascending or descending order of priorities, and then indicate, via uplink control signaling (e.g., UTO-UCI), based on the ordering, the usages of CG PUSCH transmission occasions of each CG configuration among the at least one CG configuration;

Optionally, the terminal can sort the at least one CG configuration based on any one or any combination of (b1)-(b5), and then indicate, via uplink control signaling (e.g., UTO-UCI), based on the ordering, the usages of CG PUSCH transmission occasions of each CG configuration among the at least one CG configuration, which will not be listed one by one.

For example, the terminal can, according to base station configuration and/or protocol definition, sort the CG PUSCH transmission occasions of the at least one CG configuration included in the time window indicated by UTO-UCI (e.g., the first time window) according to a first rule. The first rule includes one or several of the following reference factors:

Frequency-domain resources, such as: a starting position of a Resource Block Group (RBG) of a CG configuration, an ending position of an RBG of a CG configuration, a frequency-domain resource size, a starting position of a frequency-domain resource, an ending position of a frequency-domain resource;

Time-domain resources, such as: a starting position of a time unit where a CG PUSCH transmission occasion is located, an ending position of a time unit where a CG PUSCH is located, a duration of a time unit where a CG PUSCH transmission occasion is located, etc.; here, the time unit can be a slot, symbol, millisecond, etc.

Spatial-domain resources, such as: an antenna port where a CG PUSCH transmission occasion is located, an associated Transmission Configuration Indication (TCI) state, etc.;

ConfiguredGrantConfigindex corresponding to a CG configuration configured by higher-layer signaling;

configuredGrantConfigIndexMAC index at the MAC layer;

physical layer priority P0 or P1 of a CG configuration;

priority of a logical channel associated with a CG configuration;

dedicated priority of CG configurations jointly indicated by UTO-UCI.

In one embodiment, the terminal can sort the at least one CG configuration based on time-domain, frequency-domain, and index value (e.g., CG configuration index, or CG configuration order), e.g., sorting first based on time-domain position, then based on frequency-domain position, then further sorting based on CG configuration index. That is: sorting is performed first CG transmission opportunities on different time domains at a certain frequency point, then sorting is performed according to frequency-domain order. For CG PUSCH transmission occasions with overlapping frequency domains, they are arranged in chronological order. If CG PUSCH transmission occasions have overlapping time domains, they can be arranged in ascending or descending order of CG configuration index.

In one embodiment, the terminal can sort the at least one CG configuration based on time-domain and frequency-domain, e.g., soring first based on frequency-domain position, then based on time-domain position. That is: sorting is performed first based on time-domain position, e.g., sorting CG PUSCH transmission occasions on different frequency-domain resources in one slot, then sorting CG PUSCH transmission occasions on different time-domain resource positions, e.g., sorting CG PUSCH transmission occasions on different slots. For CG PUSCH transmission occasions with overlapping time domains, they are arranged in the order of frequency-domain resources. The frequency-domain resources here can be one or more of a BWP starting position, an RBG starting position, an RBG ending position, or an RBG size.

In one embodiment, UCI indicates the usages of CG PUSCH transmission occasions within a specific window (e.g., the first time window), where the window is a sliding time window. Within this window, CG PUSCH transmission occasions can be sorted by first sorting based on frequency-domain position, then based on time-domain position.

In one embodiment, UCI indicates the usages of CG PUSCH transmission occasions within a specific window (e.g., the first time window). For CG PUSCH transmission occasions with overlapping frequency-domain and/or time-domain resources, they can be selected to have the same antenna port as the CG PUSCH transmission occasion where UTO-UCI is located, or arranged in the order of antenna ports.

Optionally, the index value related to the at least one CG configuration includes at least one of the following:

a configured grant index corresponding to the at least one CG configuration;

a Media Access Control (MAC) layer configured grant index corresponding to the at least one CG configuration;

an index of a logical channel associated with the at least one CG configuration; or

a dedicated index of at least one CG configuration jointly indicated by the uplink control signaling.

Optionally, the terminal can sort the at least one CG configuration based on an index value related to the at least one CG configuration, and then indicate, via uplink control signaling (e.g., UTO-UCI), based on the ordering, the usages of CG PUSCH transmission occasions of each CG configuration among the at least one CG configuration. The index value related to the at least one CG configuration is any one or any combination of: a configured grant index corresponding to the at least one CG configuration, or a Media Access Control (MAC) layer configured grant index corresponding to the at least one CG configuration, or an index of a logical channel associated with the at least one CG configuration, or a joint indication index of at least one CG configuration jointly indicated by the uplink control signaling;

Optionally, the terminal can sort the at least one CG configuration in descending or ascending order based on the configured grant index corresponding to the at least one CG configuration, and then indicate, via uplink control signaling (e.g., UTO-UCI), based on the ordering, the usages of CG PUSCH transmission occasions of each CG configuration among the at least one CG configuration;

Optionally, the terminal can sort the at least one CG configuration in descending or ascending order based on the Media Access Control (MAC) layer configured grant index corresponding to the at least one CG configuration, and then indicate, via uplink control signaling (e.g., UTO-UCI), based on the ordering, the usages of CG PUSCH transmission occasions of each CG configuration among the at least one CG configuration;

Optionally, the terminal can sort the at least one CG configuration in descending or ascending order based on the index of a logical channel associated with the at least one CG configuration, and then indicate, via uplink control signaling (e.g., UTO-UCI), based on the ordering, the usages of CG PUSCH transmission occasions of each CG configuration among the at least one CG configuration;

Optionally, the terminal can sort the at least one CG configuration in descending or ascending order based on the joint indication index of at least one CG configuration jointly indicated by the uplink control signaling, and then indicate, via uplink control signaling (e.g., UTO-UCI), based on the ordering, the usages of CG PUSCH transmission occasions of each CG configuration among the at least one CG configuration;

In one embodiment, the terminal can sort based on the order of at least one CG configuration, i.e., first sort CG configurations whose UTO-UCI enabling variable is "1" or "true", then sort CG configurations whose UTO-UCI enabling variable is "0" or "false". Here, the specific window can be a fixed window, corresponding to a window of a specific time length; or the specific window can be a sliding window, i.e., a fixed-size window after the CG PUSCH; or the specific window can correspond to a specific number of CG transmission opportunities.

In one embodiment, for multiple CG configurations whose UTO-UCI enabling variable is "1" or "true", they are arranged in ascending or descending order of CG configuration index.

It should be noted that the terminal carries uplink control signaling via a CG PUSCH with data transmission to indicate CG PUSCH transmission occasions of at least one CG configuration within the first time window. For different sorting methods, the information field size carried by the uplink control signaling may be different. In the uplink control signaling indication, "0" may indicate that the transmission opportunity is used, and "1" may indicate that the transmission opportunity is not used;

For example, the information field size carried by the uplink control signaling can be the total number of all indicated CG PUSCH transmission occasions within a fixed time window (e.g., the first time window), or the maximum number of all indicated CG PUSCH transmission occasions. Here, the CG PUSCH transmission occasions can be configured CG PUSCH transmission occasions, or they can be valid CG PUSCH transmission occasions, i.e., CG PUSCH transmission occasions that can be used for uplink transmission. For CG PUSCH transmission occasions conflicting with downlink symbols, they may not be usable for uplink transmission, so such CG PUSCH transmission occasions can be considered invalid. If the terminal supports duplex transmission, then CG PUSCH transmission occasions conflicting with downlink symbols can be used for uplink transmission, so such CG PUSCH transmission occasions can be considered valid.

The structure of the information field carried by the uplink control signaling is one or a combination of the following:

Method 1: {Usage of CG transmission occasions corresponding to frequency-domain set 1, ..., usage of CG transmission occasions corresponding to frequency-domain set N}.

Method 2: {Usage of CG transmission occasions corresponding to time-domain set 1, ..., usage of CG transmission occasions corresponding to time-domain set N};

Method 3: {Usage of a maximum number of CG PUSCH transmission occasions within configuration window 1, ..., usage of a maximum number of CG PUSCH transmission occasions within configuration window N};

For example: When using a sliding window indication, the number of CG PUSCH transmission occasions in each window indicated by UCI may change. The base station can configure the maximum number of CG PUSCH transmission occasions per window. Within the window, indication can be further performed in the order of frequency-domain, time-domain, spatial-domain, etc., for example, first frequency-domain then time-domain order.

Method 4: {Usage of CG transmission occasions corresponding to CG configuration 1, ..., usage of CG transmission occasions corresponding to CG configuration N}.

Optionally, the uplink control signaling being used to indicate usages of CG PUSCH transmission occasions in a CG configuration group or in at least one CG configuration, includes:

the uplink control signaling being used to indicate usages of any two CG PUSCH transmission occasions whose resources overlap in the CG configuration group or in the at least one CG configuration.

Specifically, among the CG PUSCH transmission occasions whose usages are indicated by the terminal via uplink control signaling (e.g., UTO-UCI), resources (one or more of time-domain, frequency-domain, or spatial-domain) corresponding to a part or all of the CG transmission opportunities partially overlap or completely overlap.

Optionally, the uplink control signaling being used to indicate usages of any two CG PUSCH transmission occasions whose resources overlap in the CG configuration group or in the at least one CG configuration, includes at least one of the following:

the uplink control signaling being used to indicate that one of the any two CG PUSCH transmission occasions whose resources overlap in the CG configuration group or in the at least one CG configuration is used or not used;

the uplink control signaling being used to indicate that a CG PUSCH transmission occasion with a lower priority among the any two CG PUSCH transmission occasions whose resources overlap in the CG configuration group or in the at least one CG configuration is used or not used, where the uplink control signaling is carried in a CG transmission corresponding to a CG PUSCH transmission occasion with a higher priority among the any two CG PUSCH transmission occasions whose resources overlap; or

the uplink control signaling being used to indicate that usages of the any two CG PUSCH transmission occasions whose resources overlap in the CG configuration group or in the at least one CG configuration are determined by a terminal.

Specifically, among the CG PUSCH transmission occasions whose usages are indicated by the terminal via uplink control signaling (e.g., UTO-UCI), resources (one or more of time-domain, frequency-domain, or spatial-domain) corresponding to a part or all of the CG transmission opportunities partially overlap or completely overlap;

For any two CG PUSCH transmission occasions whose resources overlap, the usage of one of them can be indicated as used or not used;

For any two CG PUSCH transmission occasions whose resources overlap, the usage of the CG PUSCH transmission occasion with a higher priority can be indicated as not used;

For any two CG PUSCH transmission occasions whose resources overlap, the usage of the CG PUSCH transmission occasion with a lower priority can be indicated as used;

For any two CG PUSCH transmission occasions whose resources overlap, the usage of the CG PUSCH transmission occasion with a higher priority can be indicated as used;

For any two CG PUSCH transmission occasions whose resources overlap, the usage of the CG PUSCH transmission occasion with a lower priority can be indicated as not used;

For any two CG PUSCH transmission occasions whose resources overlap, the usage of the CG PUSCH transmission occasion with a higher priority can be indicated as not used, and the usage of the CG PUSCH transmission occasion with a lower priority can be indicated as used;

For any two CG PUSCH transmission occasions whose resources overlap, the usage of the CG PUSCH transmission occasion with a higher priority can be indicated as used, and the usage of the CG PUSCH transmission occasion with a lower priority can be indicated as not used;

For any two CG PUSCH transmission occasions whose resources overlap, UTO-UCI carried by the CG with a higher priority can be used to indicate the usage of CG PUSCH transmission occasions in the CG configuration with a lower priority, for example, indicating it as used;

For any two CG PUSCH transmission occasions whose resources overlap, UTO-UCI carried by the CG with a higher priority can be used to indicate the usage of CG PUSCH transmission occasions in the CG configuration with a lower priority, for example, indicating it as not used;

For any two CG PUSCH transmission occasions whose resources overlap, if the two have the same priority, the indication can be based on the actual usage of these two resource-overlapping CG PUSCH transmission occasions.

In one embodiment, within the first time window, when different CG PUSCHs conflict, or when UCI indication information in different CG transmissions conflicts, or when CG PUSCH and UCI indication information in CG transmission conflict, transmission can be performed according to a second rule. The second rule specifically includes one or more of the following:

When a CG PUSCH transmission occasion with a higher "priority" is indicated as "not used", a CG PUSCH transmission occasion with a lower "priority" that overlaps with it in resources can be indicated as "used".

When a CG PUSCH transmission occasion with a higher "priority" is indicated as "used", a CG PUSCH transmission occasion with a lower "priority" that overlaps with it in resources can be indicated as "not used".

When a CG PUSCH transmission occasion with a higher "priority" is indicated as "used", and a CG PUSCH transmission occasion with a lower "priority" that overlaps with it in resources is indicated as "not used", subsequent CG PUSCH transmission occasions with a lower "priority" can be indicated as "used".

For CG PUSCH transmission occasions with equal "priority", the terminal can indicate the usage of the corresponding CG PUSCH transmission occasions via UCI.

For CG PUSCH transmission occasions with equal "priority", the terminal can indicate the usage of the corresponding CG PUSCH transmission occasions via UCI based on signaling indication or configuration information from the base station.

Optionally, sending configuration information to the terminal, where the configuration information is used to configure related information of at least one of: the uplink control signaling, the CG configuration group, the at least one CG configuration, or the CG PUSCH transmission occasions; where the configuration information is used to indicate usages of CG PUSCH transmission occasions in the CG configuration group or the at least one CG configuration.

Optionally, the base station can configure multiple sets of CG configurations for the terminal, including at least one CG configuration, which can carry indication of CG PUSCH transmission occasion usage, i.e., used or not used; the terminal can also determine and indicate a scheme for indicating the usages of CG PUSCH transmission occasions of at least one CG configuration among the multiple sets of CG configurations based on configuration information sent by the network-side device and/or based on protocol-predefined information.

Optionally, the configuration information includes at least one of the following:

a plurality of CG configurations, where the plurality of CG configurations include at least one CG configuration in the CG configuration group or the at least one CG configuration;
a CG configuration carrying the uplink control signaling;
an uplink control signaling enabling variable, where the uplink control signaling enabling variable is used to characterize whether the uplink control signaling is carried on a CG PUSCH of a CG configuration associated with the uplink control signaling;
at least one CG configuration jointly indicated by the uplink control signaling;
a first time window indicated by the uplink control signaling;
a quantity or a maximum quantity of CG PUSCH transmission occasions of at least one CG configuration jointly indicated by the uplink control signaling;
an uplink control signaling joint indication identifier, where the uplink control signaling joint indication identifier is used to characterize whether a CG configuration where the uplink control signaling joint indication identifier is located supports uplink control signaling joint indication;
first indication information, where the first indication information is used to indicate that the uplink control signaling indicates usages of CG PUSCH transmission occasions of a first type of CG configuration, and the first type includes Type 1 CG and/or Type 2 CG;
second indication information, where the second indication information is used to indicate that the uplink control signaling indicates usages of CG PUSCH transmission occasions of CG configurations associated with a same logical channel;
third indication information, where the third indication information is used to indicate related information of CG PUSCH transmission occasions whose usages are indicated by the uplink control signaling; or
a priority corresponding to the at least one CG configuration.

Optionally, the configuration information sent by the network-side device to the terminal may include multiple CG configurations, and the terminal may indicate the usages of CG PUSCH transmission occasions of the CG configuration group or at least one CG configuration included in the multiple CG configurations;

for example, the network-side device configures CG1, CG2, and CG1 for the terminal; then the multiple CG configurations include CG1, CG2, and CG3; the CG configuration group or at least one CG configuration to which the CG PUSCH transmission occasions whose usages are indicated by the terminal belong may include only CG1, or CG2, or CG1, or may include CG1 and CG3, or CG2 and CG3, or CG1 and CG2, or may include CG1, CG2, and CG3. Optionally, the network-side device can configure for the terminal a CG configuration allowed to carry the uplink control signaling;
Optionally, the network-side device configures a first time window for the terminal, which may include one or a combination of a starting position, duration, ending position, etc. of the first time window.

Optionally, the network-side device can configure for the terminal any one or any combination of (c1)-(c11), which will not be listed one by one.
Optionally, the terminal can determine and indicate a scheme for indicating the usages of CG PUSCH transmission occasions of at least one CG configuration among multiple sets of CG configurations based on any one or any combination of (c1)-(c11) and/or protocol-predefined information.
In one embodiment, the base station configures UTO-UCI for the terminal via configuration information, i.e., configures related configurations for the terminal regarding UTO-UCI indicating the usages of CG transmission occasions of at least one CG configuration, including one or more of the following:

CG configuration carrying UTO-UCI;
UTO-UCI enabling variable, i.e., whether the current CG transmission carries UTO-UCI;
at least one CG configuration indicated by UTO-UCI, i.e., CG configurations jointly indicated by UTO-UCI;
a first time window indicated by UTO-UCI, where the first time window can be a fixed time window or a sliding time window;
a quantity or maximum quantity of CG PUSCH transmission occasions of CG configurations jointly indicated by UTO-UCI;

UTO-UCI joint indication identifier, i.e., whether the current CG configuration supports UTO-UCI joint indication;
a group of CG configurations indicated by UTO-UCI, where higher-layer signaling configures a group of CG configurations.

Optionally, the related information of the CG PUSCH transmission occasions whose usages are indicated by the uplink control signaling indicates at least one of the following:

that time-domain resources of the CG PUSCH transmission occasions overlap;
that frequency-domain resources of the CG PUSCH transmission occasions overlap; or
that spatial-domain resources of the CG PUSCH transmission occasions overlap.

Optionally, the related information of the CG PUSCH transmission occasions whose usages are indicated by the uplink control signaling can be indicated by one piece of indication information, i.e., the third indication information; Optionally, the related information of the CG PUSCH transmission occasions whose usages are indicated by the uplink control signaling can be indicated by three pieces of indication information, i.e., three sub-indication information included in the third indication information, respectively indicating the usages of CG PUSCH transmission occasions with time-domain resource overlapping, frequency-domain resource overlapping, and spatial-domain resource overlapping.

Optionally, the priority corresponding to the at least one CG configuration includes:

a physical layer priority of the at least one CG configuration;
a priority of a logical channel associated with the at least one CG configuration;
a dedicated priority of the uplink control signaling; or
a dedicated priority of CG configurations jointly indicated by the uplink control signaling.

The priority of the at least one CG configuration involved in the embodiments of the present disclosure may be a physical layer priority, or a priority of an associated logical channel, or a dedicated priority of the uplink control signaling, or a dedicated priority of CG configurations jointly indicated by the uplink control signaling.

The embodiments of the present disclosure can further carry, via UCI, information about the usages of CG PUSCH transmission occasions in other CG configurations, dynamically feedback their usage, reduce signaling overhead, and the base station can recycle unused CG PUSCH transmission opportunities and allocate them to other users.

In one embodiment, when there is multi-stream transmission, the base station configures and/or activates multiple sets of CG configurations for the terminal to adapt to different types of data stream transmission.

For example: Uplink services include: video stream, audio, and control/attitude data streams. The Quality of Service (QoS) of these several data streams are different. Therefore, the base station may associate these three types of data streams with different LCHs, and configure corresponding CG configurations for each different LCG, namely CG configuration #1, CG configuration #2, and CG configuration #3. Considering that service generation has a certain degree of synchronization, it is assumed that CG configuration #1 - CG configuration #3 are configured or activated simultaneously.

In one embodiment, when there is multi-stream transmission, the base station configures and/or activates multiple sets of CG configurations for the terminal to adapt to different types of data stream transmission.

For example: Uplink services include: video stream, audio, and control/attitude data streams. The Quality of Service (QoS) of these several data streams are different. Therefore, the base station may associate these three types of data streams with different LCHs, and configure corresponding CG configurations for each different LCG, namely CG configuration #1, CG configuration #2, and CG configuration #3. Considering that service generation has a certain degree of synchronization, it is assumed that CG configuration #1 - CG configuration #3 are configured or activated simultaneously.

Assume that these three CG configurations all support sending UCI for indicating CG PUSCH transmission occasion usage (UTO-UCI) on PUSCH. The UTO-UCI reporting method may include one or several of the following: The base station configures a UTO-UCI enabling variable in a specific CG configuration, i.e., whether CG PUSCH in the current CG configuration multiplexes UTO-UCI signaling. For example, when the UTO-UCI enabling variable is "1" or "true", there is UTO-UCI reporting on the current CG configuration's CG PUSCH; conversely, when the UTO-UCI enabling variable is "0" or "false" or is configured as empty, there is no UTO-UCI reporting on the current CG configuration's CG PUSCH.

The base station configures one or more of: a time window indicated by UTO-UCI, CG configurations jointly indicated by UTO-UCI, etc.;

The terminal receives one or more of configuration information such as the uplink control signaling enabling variable, the first time window indicated by the uplink control signaling, and at least one CG configuration jointly indicated by the uplink control signaling sent by the base station;

For at least one CG configuration jointly indicated by the uplink control signaling, the terminal sorts the CG PUSCH transmission occasions within the time window according to a first rule, where the first rule specifically may be one or several of the following:

Solution 1: arranging in the order of at least one of time-domain, frequency-domain, or spatial-domain:

Example 1: FIG. 2 is a first schematic diagram of CG transmission occasion ordering provided by an embodiment of the present disclosure. As shown in Example 1 of FIG. 2, sorting can be performed first based on time-domain position, then based on frequency-domain position, then further sorting based on CG configuration index. That is: first sort CG transmission opportunities on different time domains at a certain frequency point, then sort according to frequency-domain order. For CG PUSCH transmission occasions with overlapping frequency domains, they are arranged in chronological order. If CG PUSCH transmission occasions have overlapping time domains, they can be arranged in ascending or descending order of CG configuration index.

Example 2: First sorting based on frequency-domain position, then based on time-domain position. That is: first sort based on time-domain position, for example, sort CG PUSCH transmission occasions on different frequency-domain resources in one slot, then sort CG PUSCH transmission occasions on different time-domain resource positions, e.g., sort CG PUSCH transmission occasions on different slots. For CG PUSCH transmission occasions with overlapping time domains, they are arranged in the order of frequency-domain resources. The frequency-domain resources here can be one or more of a BWP starting position, an RBG starting position, an RBG ending position, or an RBG size.

Example 3: UCI indicates the usages of CG PUSCH transmission occasions within a specific window (e.g., the first time window), where the window is a sliding time window. In FIG. 2, CG PUSCH transmission occasions are sorted by first sorting based on frequency-domain position, then based on time-domain position.

Solution 2: sorting according to the order of CG configurations, i.e., first sort CG configurations whose UTO-UCI enabling variable is "1" or "true", then sort CG configurations whose UTO-UCI enabling variable is "0" or "false". FIG. 3 is a second schematic diagram of CG transmission occasion ordering provided by an embodiment of the present disclosure. As shown in FIG. 3, where:

Example 1: The specific window is a fixed window, or a specific number of CG transmission opportunities.

Example 2: The specific window is a sliding window, i.e., a fixed-size window after the CG PUSCH, or a specific number of CG transmission opportunities.

For multiple CG configurations whose UTO-UCI enabling variable is "1" or "true", they are arranged in ascending or descending order of CG configuration index. Here, the specific number of CG transmission opportunities can be a fixed value, or it can be the maximum number of CG PUSCH transmission occasions indicated by the uplink control signaling.

It should be noted that the terminal carries uplink control signaling via a CG PUSCH with data transmission to indicate CG PUSCH transmission occasions of at least one CG configuration within the first time window. For different sorting methods, the information field size carried by the uplink control signaling may be different. In the uplink control signaling indication, "0" may indicate that the transmission opportunity is used, and "1" may indicate that the transmission opportunity is not used;

For example, the information field size carried by the uplink control signaling can be the total number of all indicated CG PUSCH transmission occasions within a fixed time window (e.g., the first time window), or the maximum number of all indicated CG PUSCH transmission occasions.

The structure of the information field carried by the uplink control signaling is one or a combination of the following: Method 1: {Usage of CG transmission occasions corresponding to frequency-domain set 1, ..., usage of CG transmission occasions corresponding to frequency-domain set N}.

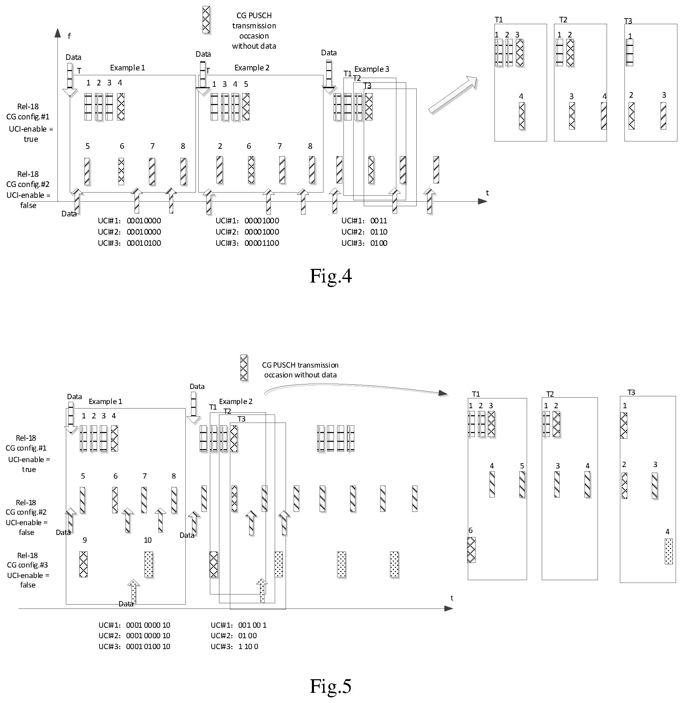

Here, FIG. 4 is a third schematic diagram of CG transmission occasion ordering provided by an embodiment of the present disclosure. As shown in Example 1 of FIG. 4, the usage of CG transmission occasions corresponding to frequency-domain set n includes a set of CG PUSCH transmission occasions {TOn1,...,TOnK} corresponding to at least one CG configuration with the same frequency-domain resource. TOnk is the transmission opportunity of CG configuration k in a fixed time window for the same frequency-domain set. The specific number of transmission opportunities in {TOn1,...,TOnK} is Nnk. The transmission opportunities in this set can be arranged in chronological order, or indicated according to CG configuration index. The total number is Nn1 +...+ NnK.

Optionally, the information field sizes corresponding to the usage of CG transmission occasions for different frequency-domain sets n can be the same or different.

Optionally, different information field sizes can be obtained explicitly according to base station configuration, or indirectly obtained through CG configuration and the configured time window.

For example: Obtained through specific information, such as CG configurations associated with the same logical channel, or all or part of Rel-18 CG configurations.

Method 2: {Usage of CG transmission occasions corresponding to time-domain set 1, ..., usage of CG transmission occasions corresponding to time-domain set N};

Here, as in Example 2 of FIG. 4, the usage of CG transmission occasions corresponding to time-domain set n is a set of CG PUSCH transmission occasions {TOn1,...,TOnk} of at least one CG configuration within the same time unit (e.g., slot). TOnk is the transmission opportunity of CG configuration k in a fixed time window for the same time unit. The specific number of transmission opportunities in {TOn1,...,TOnK} is Nnk. The transmission opportunities in this set are arranged in the order of frequency-domain resources, or indicated according to CG configuration index. The total number is Nn1+...+NnK.

Method 3: As in Example 3 of FIG. 4, when using a sliding window indication, the number of CG PUSCH transmission occasions in each window indicated by UCI may change. The base station can configure the maximum number of CG PUSCH transmission occasions per window. Within the window, indication can be further performed in the order of frequency-domain, time-domain, spatial-domain, etc., for example, first frequency-domain then time-domain order.

Method 4: {Usage of CG transmission occasions corresponding to CG configuration 1, ..., usage of CG transmission occasions corresponding to CG configuration N};

Here, FIG. 5 is a fourth schematic diagram of CG transmission occasion ordering provided by an embodiment of the present disclosure. As shown in Example 1 of FIG. 5, UCI indicates the usages of CG PUSCH transmissions within a fixed time window, sorted according to the order of CG configurations. The information field size corresponding to different CG configurations can be obtained based on their CG configuration and the fixed window, or can be obtained through higher-layer signaling configuration. The information field sizes corresponding to different CG configurations can be the same or different.

Method 5: {Usage of CG transmission occasions corresponding to CG configuration 1, ..., usage of CG transmission occasions corresponding to CG configuration N};

Here, as in Example 2 of FIG. 5, UCI indicates the usages of CG PUSCH transmissions within a sliding window, sorted according to the order of CG configurations. The information field size corresponding to different CG configurations can be configured with a maximum value through higher-layer signaling, or configured with a fixed value. The information field sizes corresponding to different CG configurations can be the same or different.

For UCI indication information, if the terminal has not yet received data arrival and cannot predict the data packet arrival situation, it can indicate the corresponding CG PUSCH transmission opportunity as "occupied". The terminal can then indicate the usages of subsequent nearby CG PUSCH transmission opportunities based on the data packet arrival situation.

In one embodiment, for multiple CG transmissions configured with PHY priority;

When configuring and/or activating multiple CG transmissions, take 2 CG configurations as an example. When CG configuration #1 and CG configuration #2 are configured with physical layer priorities P1 and P0 respectively, i.e., the priority of CG configuration #1 is higher than that of CG configuration #2. This embodiment only gives examples for the case where CG configuration #1 and CG configuration #2 have resource conflicts.

Example 1: FIG. 6 is a first schematic diagram of UCI indication provided by an embodiment of the present disclosure. As shown in Example 1 of FIG. 6, CG configuration #1 and CG configuration #2 support indication of CG transmission occasion usage via UCI#1 and UCI#2 respectively. When CG configuration #1 and CG configuration #2 have CG PUSCH transmission occasion resource overlapping and have data to transmit, due to the configured physical layer priority, the terminal transmits data only on the CG PUSCH transmission occasion of CG configuration #1. But when there is no data transmission on the resource-overlapping CG configuration #1, the terminal can transmit data on the CG PUSCH transmission occasion of CG configuration #2. This can be indicated via UCI carried on CG configuration #2.

Since CG configuration #1 and CG configuration #2 have CG PUSCH transmission occasion resource overlapping, and CG configuration #1 has a higher priority than CG configuration #2, the second CG transmission opportunity in the window cannot be used. UCI#2-1 indicates "01", where "0" means the CG PUSCH transmission opportunity is "used", and "1" means the CG PUSCH transmission opportunity is "not used". When the last CG PUSCH transmission opportunity in the window of CG configuration #1 is "not used", UCI#2-2 indicates "00". Alternatively, since UCI#2-1 indicates "01", the second CG transmission opportunity in the window of CG configuration #2 still cannot be used, so the terminal will not send the UCI#2-2 indication.

Example 2: As shown in Example 2 of FIG. 6, CG configuration #1 and CG configuration #2 are associated, i.e., UCI can simultaneously indicate the usages of CG PUSCH transmission occasions on CG configuration #1 and CG configuration #2. It is indicated via UCI#1 on CG configuration #1 which has a higher physical layer priority, specifically indicating that data is transmitted on CG PUSCH transmission occasions of lower-priority CG configuration #2.

Since the UCI in the high-priority CG configuration #1 can know the transmission situation of CG PUSCH within the time window, it can then notify the base station side whether the CG PUSCH with overlapping transmission resources in CG configuration #2 is used. This method, compared to Example 1, can reduce data delay caused by unusable CG PUSCH transmission opportunities in low-priority CG configuration #2.

Optionally, it can also be indicated via UCI#2 on CG configuration #2 which has a lower physical layer priority, specifically sending indication information based on the occupancy of CG PUSCH transmission opportunities on the high-priority CG configuration #1, notifying the base station whether its CG PUSCH transmission opportunities are used.

In one embodiment, the protocol can define at least one CG configuration jointly indicated by UTO-UCI;

When configuring and/or activating multiple CG configurations, under protocol-defined conditions, UTO-UCI indicates the usages of CG PUSCH transmission occasions of multiple CG configurations. In this embodiment, specific examples are given as follows, supporting one or a combination of items:

Solution 1: Through CG PUSCH carrying UTO-UCI, legacy CG transmissions are also indicated. Here, legacy CG refers to CG transmission that does not support carrying UCI on CG PUSCH, which can be equivalent to the situation in the foregoing embodiment where when the UTO-UCI enabling variable in the CG configuration is "0" or "false" or configured as empty, i.e., there is no UTO-UCI reporting on the current CG configuration's CG PUSCH.

Solution 2: UTO-UCI is only used to indicate CG transmissions of the same type. CG transmission can be configured via higher-layer signaling, i.e., Type1 CG, or can be activated/deactivated via DCI, i.e., Type 2 CG. For example:

When UTO-UCI is carried on a Type-1 CG PUSCH, UTO-UCI only indicates the usages of CG PUSCH transmission occasions of at least one Type1 CG configuration.

When the LCH associated with the CG configuration where UTO-UCI is located has configuredGrantType1Allowed set to true, then UTO-UCI only indicates the usages of CG PUSCH transmission occasions of at least one Type1 CG configuration, or UTO-UCI only indicates the usages of CG PUSCH transmission occasions of at least one Type1 CG configuration associated with the same LCH.

When UTO-UCI is carried on a Type-2 CG PUSCH, UTO-UCI only indicates the usages of CG PUSCH transmission occasions of at least one Type2 CG configuration. The specific Type-2 CG configuration indicated can be configured via higher-layer signaling or defined by protocol.

Solution 3: UTO-UCI indicates CG transmissions associated with the same LCH. Specific examples are:

When the base station configures a logical channel LCH configuration and configures an allowedCG-List associating a list of CG configurations, then UTO-UCI indicates CG transmissions associated with the same LCH.

When the base station configures LCH priority, then UTO-UCI can jointly indicate the usages of CG PUSCH transmission occasions under CG configurations associated with at least one LCH of the same priority.

Solution 4: UTO-UCI indicates CG transmission opportunities whose time/frequency/spatial-domain resources overlap. Specific examples are:

When CG PUSCH transmission occasions of multiple CG configurations partially or completely overlap in time/frequency/spatial-domain resources, in order to enable the terminal to use the corresponding CG PUSCH transmission opportunities more effectively, e.g., selecting a suitable CG PUSCH transmission opportunity based on data packet size, the terminal indicates via UTO-UCI the usage of CG PUSCH transmission occasions on the actually used CG configuration, to indicate the CG PUSCH transmission opportunities on the actually used CG configuration.

Based on the above protocol-defined CG configurations that satisfy the conditions indicated by UTO-UCI, sort the CG PUSCH transmission occasions of at least one CG configuration within the time window. The specific sorting method can refer to the foregoing embodiments.

The terminal device involved in the embodiments of the present disclosure may refer to a device that provides voice and/or data connectivity to users, a handheld device with wireless connection function, or other processing device connected to a wireless modem. In different systems, the name of the terminal device may also be different. For example, in a 5G system, the terminal device may be called User Equipment (UE). A wireless terminal device can communicate with one or more Core Networks (CN) via a Radio Access Network (RAN). The wireless terminal device may be a mobile terminal device, such as a mobile phone (or called a "cellular" phone) and a computer with a mobile terminal device. For example, it may be a portable, pocket-sized, handheld, computer-built-in, or vehicle-mounted mobile device that exchanges language and/or data with the wireless access network. For example, a Personal Communication Service (PCS) phone, a cordless phone, a Session Initiated Protocol (SIP) phone, a Wireless Local Loop (WLL) station, a Personal Digital Assistant (PDA), and other devices. The wireless terminal device may also be called a system, a subscriber unit, a subscriber station, a mobile station, a mobile, a remote station, an access point, a remote terminal, an access terminal, a user terminal, a user agent, a user device. The embodiments of the present disclosure do not limit this.

The network device involved in the embodiments of the present disclosure may be a base station, which may include multiple cells providing services for terminals. Depending on the specific application scenario, the base station may also be called an access point, or may be a device in an access network that communicates with wireless terminal devices via one or more sectors over an air interface, or other names. The network device can be used to interchange received air frames with Internet Protocol (IP) packets, acting as a router between the wireless terminal device and the rest of the access network, where the rest of the access network may include an IP communication network. The network device can also coordinate the management of attributes for the air interface. For example, the network device involved in the embodiments of the present disclosure may be a network device (Base Transceiver Station, BTS) in Global System for Mobile communications (GSM) or Code Division Multiple Access (CDMA), or may be a network device (NodeB) in Wideband Code Division Multiple Access (WCDMA), or may be an evolved network device (evolutional Node B, eNB or e-NodeB) in a Long Term Evolution (LTE) system, a 5G base station (gNB) in a 5G network architecture (next generation system), or may be a Home evolved Node B (HeNB), a relay node, a femto base station, a pico base station, etc. The embodiments of the present disclosure do not limit this. In some network structures, the network device may include a Centralized Unit (CU) node and a Distributed Unit (DU) node, and the centralized unit and the distributed unit may also be geographically separated.

The network device and the terminal device may each use one or more antennas for Multi Input Multi Output (MIMO) transmission. MIMO transmission may be Single User MIMO (SU-MIMO) or Multiple User MIMO (MU-MIMO). According to the form and number of antenna combinations, MIMO transmission may be 2D-MIMO, 3D-MIMO, FD-MIMO, or massive-MIMO, or may be diversity transmission, precoding transmission, or beamforming transmission, etc.

FIG. 8 is a schematic structural diagram of a terminal provided by an embodiment of the present disclosure. As shown in FIG. 8, the terminal includes a memory 820, a transceiver 800, and a processor 810, where:

the memory 820 is configured to store a computer program; the transceiver 800 is configured to send and receive data under control of the processor 810; the processor 810 is configured to read the computer program from the memory 820 and perform the following operations:

indicating, via uplink control signaling, usages of configured grant physical uplink shared channel (CG PUSCH) transmission occasions in a CG configuration group or in at least one CG configuration;

where the CG configuration group includes the at least one CG configuration, and an association relationship exists among the at least one CG configuration.

Specifically, the transceiver 800 is configured to receive and send data under control of the processor 810.

In FIG. 8, the bus architecture may include any number of interconnected buses and bridges, specifically linking various circuits of one or more processors represented by the processor 810 and memories represented by the memory 820. The bus architecture may also link various other circuits such as peripherals, voltage regulators, and power management circuits, which are well known in the art and therefore will not be further described herein. A bus interface provides an interface. The transceiver 800 may be multiple elements, i.e., including a transmitter and a receiver, providing units for communicating with various other apparatuses over transmission media, which include wireless channels, wired channels, optical cables, and other transmission media. For different user equipment, a user interface 830 may also be an interface capable of externally or internally connecting needed devices, including but not limited to a keypad, a display, a speaker, a microphone, a joystick, etc.

The processor 810 is responsible for managing the bus architecture and general processing, and the memory 820 may store data used by the processor 810 when performing operations.

Optionally, the processor 810 may be a Central Processing Unit (CPU), an Application Specific Integrated Circuit (ASIC), a Field-Programmable Gate Array (FPGA), or a Complex Programmable Logic Device (CPLD). The processor may also adopt a multi-core architecture.

The processor calls the computer program stored in the memory to execute, according to the obtained executable instructions, any method provided by the embodiments of the present disclosure. The processor and the memory may also be physically arranged separately.

Optionally, the association relationship among the at least one CG configuration includes at least one of the following:

the at least one CG configuration is associated with a same logical channel;
the at least one CG configuration has a same priority;
the at least one CG configuration corresponds to a same Type;
CG PUSCH transmission occasions of the at least one CG configuration are within a first time window;
the at least one CG configuration corresponds to different priorities, and a priority corresponding to a CG configuration used to carry the uplink control signaling among the at least one CG configuration is higher than or equal to a priority corresponding to other CG configurations among the at least one CG configuration;
time-domain resources corresponding to a part or all of CG PUSCH transmission occasions of the at least one CG configuration partially overlap or completely overlap;
frequency-domain resources corresponding to a part or all of CG PUSCH transmission occasions of the at least one CG configuration partially overlap or completely overlap;
spatial-domain resources corresponding to a part or all of CG PUSCH transmission occasions of the at least one CG configuration partially overlap or completely overlap; or
an association relationship indicated by downlink signaling or configured by a base station.

Optionally, the processor 810 is further configured to:

indicate, via uplink control signaling, usages of CG PUSCH transmission occasions in the CG configuration group or the at least one CG configuration based on an ordering of CG PUSCH transmission occasions of the at least one CG configuration in the CG configuration group or an ordering of CG PUSCH transmission occasions of the at least one CG configuration;
where the ordering of the CG PUSCH transmission occasions of the at least one CG configuration is determined based on at least one of the following:
frequency-domain resource positions of the CG PUSCH transmission occasions of the at least one CG configuration;
time-domain resource positions of the CG PUSCH transmission occasions of the at least one CG configuration;
spatial-domain resource positions of the CG PUSCH transmission occasions of the at least one CG configuration;
an index value related to the at least one CG configuration; or
a priority corresponding to the at least one CG configuration.

Optionally, the index value related to the at least one CG configuration includes at least one of the following:

a configured grant index corresponding to the at least one CG configuration;
a Media Access Control (MAC) layer configured grant index corresponding to the at least one CG configuration;
an index of a logical channel associated with the at least one CG configuration; or
a dedicated index of at least one CG configuration jointly indicated by the uplink control signaling.

Optionally, the processor 810 is further configured to:
indicate, via the uplink control signaling, usages of any two CG PUSCH transmission occasions whose resources overlap in the CG configuration group or in the at least one CG configuration.

Optionally, the processor 810 is further configured to:

indicate, via the uplink control signaling, that one of the any two CG PUSCH transmission occasions whose resources overlap in the CG configuration group or in the at least one CG configuration is used or not used;
indicate, via the uplink control signaling, that a CG PUSCH transmission occasion with a lower priority among the any two CG PUSCH transmission occasions whose resources overlap in the CG configuration group or in the at least one CG configuration is used or not used, where the uplink control signaling is carried in a CG transmission corresponding to a CG PUSCH transmission occasion with a higher priority among the any two CG PUSCH transmission occasions whose resources overlap; or
indicate, via the uplink control signaling, that usages of the any two CG PUSCH transmission occasions whose resources overlap in the CG configuration group or in the at least one CG configuration are determined by the terminal.

Optionally, the processor 810 is further configured to:

indicate, via uplink control signaling, usages of CG PUSCH transmission occasions in the CG configuration group or the at least one CG configuration based on configuration information sent by a network-side device and/or based on protocol-predefined information;
where the configuration information is used to configure related information of at least one of: the uplink control signaling, the CG configuration group, the at least one CG configuration, or the CG PUSCH transmission occasions.

Optionally, the configuration information includes at least one of the following:

a plurality of CG configurations, where the plurality of CG configurations include at least one CG configuration in the CG configuration group or the at least one CG configuration;
a CG configuration carrying the uplink control signaling;
an uplink control signaling enabling variable, where the uplink control signaling enabling variable is used to characterize whether the uplink control signaling is carried on a CG PUSCH of a CG configuration associated with the uplink control signaling;
at least one CG configuration jointly indicated by the uplink control signaling;

a first time window indicated by the uplink control signaling;

a quantity or a maximum quantity of CG PUSCH transmission occasions of at least one CG configuration jointly indicated by the uplink control signaling;

an uplink control signaling joint indication identifier, where the uplink control signaling joint indication identifier is used to characterize whether a CG configuration where the uplink control signaling joint indication identifier is located supports uplink control signaling joint indication;

first indication information, where the first indication information is used to indicate that the uplink control signaling indicates usages of CG PUSCH transmission occasions of a first type of CG configuration, and the first type includes Type 1 CG and/or Type 2 CG;

second indication information, where the second indication information is used to indicate that the uplink control signaling indicates usages of CG PUSCH transmission occasions of CG configurations associated with a same logical channel;

third indication information, where the third indication information is used to indicate related information of CG PUSCH transmission occasions whose usages are indicated by the uplink control signaling; or

a priority corresponding to the at least one CG configuration.

Optionally, the related information of the CG PUSCH transmission occasions whose usages are indicated by the uplink control signaling indicates at least one of the following:

that time-domain resources of the CG PUSCH transmission occasions overlap;
that frequency-domain resources of the CG PUSCH transmission occasions overlap; or
that spatial-domain resources of the CG PUSCH transmission occasions overlap.

Optionally, the protocol-predefined information includes at least one of the following:

a priority corresponding to at least one CG configuration to which the CG PUSCH transmission occasions whose usages are indicated by the uplink control signaling belong;
the uplink control signaling indicating usages of CG PUSCH transmission occasions of a specified CG configuration;
the uplink control signaling being used to indicate usages of CG PUSCH transmission occasions of a first type of CG configuration, where the first type includes Type 1 CG and/or Type 2 CG;
the uplink control signaling being used to indicate usages of CG PUSCH transmission occasions of CG configurations associated with a same logical channel;
the uplink control signaling being used to indicate usages of CG PUSCH transmission occasions whose time-domain resources overlap;
the uplink control signaling being used to indicate usages of CG PUSCH transmission occasions whose frequency-domain resources overlap; or
the uplink control signaling being used to indicate usages of CG PUSCH transmission occasions whose spatial-domain resources overlap.

Optionally, the priority corresponding to the at least one CG configuration includes:

a physical layer priority of the at least one CG configuration;
a priority of a logical channel associated with the at least one CG configuration;
a dedicated priority of the uplink control signaling; or
a dedicated priority of CG configurations jointly indicated by the uplink control signaling.

It should be noted that the terminal provided in this embodiment of the present disclosure can implement all method steps implemented in the method embodiment where the execution subject is the terminal, and can achieve the same technical effects. Details and beneficial effects of parts that are the same as those in the method embodiment are not repeated here.

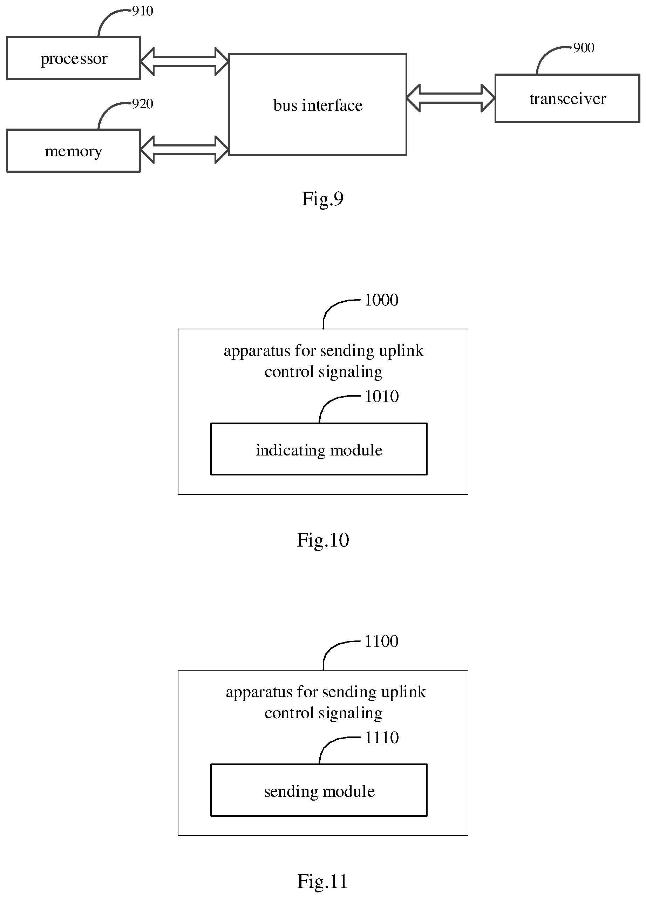

FIG. 9 is a schematic structural diagram of a network-side device provided by an embodiment of the present disclosure. As shown in FIG. 9, the network-side device includes a memory 920, a transceiver 900, and a processor 910, where:

the memory 920 is configured to store a computer program; the transceiver 900 is configured to send and receive data under control of the processor 910; the processor 910 is configured to read the computer program from the memory 920 and perform the following operations:

sending uplink control signaling to a terminal;

where the uplink control signaling is used to indicate usages of CG PUSCH transmission occasions in a CG configuration group or in at least one CG configuration; the CG configuration group includes the at least one CG configuration, and an association relationship exists among the at least one CG configuration.

Specifically, the transceiver 900 is configured to receive and send data under control of the processor 910.

In FIG. 9, the bus architecture may include any number of interconnected buses and bridges, specifically linking various circuits of one or more processors represented by the processor 910 and memories represented by the memory 920. The bus architecture may also link various other circuits such as peripherals, voltage regulators, and power management circuits, which are well known in the art and therefore will not be further described herein. A bus interface provides an interface. The transceiver 900 may be multiple elements, i.e., including a transmitter and a receiver, providing units for communicating with various other apparatuses over transmission media, which include wireless channels, wired channels, optical cables, and other transmission media.

The processor 910 is responsible for managing the bus architecture and general processing, and the memory 920 may store data used by the processor 910 when performing operations.

Optionally, the processor 910 may be a Central Processing Unit (CPU), an Application Specific Integrated Circuit (ASIC), a Field-Programmable Gate Array (FPGA), or a Complex Programmable Logic Device (CPLD). The processor may also adopt a multi-core architecture.

The processor calls the computer program stored in the memory to execute, according to the obtained executable instructions, any method provided by the embodiments of the present disclosure. The processor and the memory may also be physically arranged separately.

Optionally, the association relationship among the at least one CG configuration includes at least one of the following:

the at least one CG configuration is associated with a same logical channel;
the at least one CG configuration has a same priority;
the at least one CG configuration corresponds to a same Type;
CG PUSCH transmission occasions of the at least one CG configuration are within a first time window;
the at least one CG configuration corresponds to different priorities, and a priority corresponding to a CG configuration used to carry the uplink control signaling among the at least one CG configuration is higher than or equal to a priority corresponding to other CG configurations among the at least one CG configuration;
time-domain resources corresponding to a part or all of CG PUSCH transmission occasions of the at least one CG configuration partially overlap or completely overlap;
frequency-domain resources corresponding to a part or all of CG PUSCH transmission occasions of the at least one CG configuration partially overlap or completely overlap;
spatial-domain resources corresponding to a part or all of CG PUSCH transmission occasions of the at least one CG configuration partially overlap or completely overlap; or
an association relationship indicated by downlink signaling or configured by a base station.

Optionally, the uplink control signaling being used to indicate usages of CG PUSCH transmission occasions in a CG configuration group or in at least one CG configuration, includes:

the uplink control signaling being used to indicate usages of CG PUSCH transmission occasions in the CG configuration group or the at least one CG configuration based on an ordering of CG PUSCH transmission occasions of the at least one CG configuration in the CG configuration group or an ordering of CG PUSCH transmission occasions of the at least one CG configuration;
where the ordering of the CG PUSCH transmission occasions of the at least one CG configuration is determined based on at least one of the following:
frequency-domain resource positions of the CG PUSCH transmission occasions of the at least one CG configuration;
time-domain resource positions of the CG PUSCH transmission occasions of the at least one CG configuration;
spatial-domain resource positions of the CG PUSCH transmission occasions of the at least one CG configuration;
an index value related to the at least one CG configuration; or
a priority corresponding to the at least one CG configuration.

Optionally, the index value related to the at least one CG configuration includes at least one of the following:

a configured grant index corresponding to the at least one CG configuration;
a Media Access Control (MAC) layer configured grant index corresponding to the at least one CG configuration;
an index of a logical channel associated with the at least one CG configuration; or

a dedicated index of at least one CG configuration jointly indicated by the uplink control signaling.

Optionally, the uplink control signaling being used to indicate usages of CG PUSCH transmission occasions in a CG configuration group or in at least one CG configuration, includes:

the uplink control signaling being used to indicate usages of any two CG PUSCH transmission occasions whose resources overlap in the CG configuration group or in the at least one CG configuration.

Optionally, the uplink control signaling being used to indicate usages of any two CG PUSCH transmission occasions whose resources overlap in the CG configuration group or in the at least one CG configuration, includes at least one of the following:

the uplink control signaling being used to indicate that one of the any two CG PUSCH transmission occasions whose resources overlap in the CG configuration group or in the at least one CG configuration is used or not used;

the uplink control signaling being used to indicate that a CG PUSCH transmission occasion with a lower priority among the any two CG PUSCH transmission occasions whose resources overlap in the CG configuration group or in the at least one CG configuration is used or not used, where the uplink control signaling is carried in a CG transmission corresponding to a CG PUSCH transmission occasion with a higher priority among the any two CG PUSCH transmission occasions whose resources overlap; or

the uplink control signaling being used to indicate that usages of the any two CG PUSCH transmission occasions whose resources overlap in the CG configuration group or in the at least one CG configuration are determined by a terminal.

Optionally, the processor 910 is configured to:

send configuration information to the terminal, where the configuration information is used to configure related information of at least one of: the uplink control signaling, the CG configuration group, the at least one CG configuration, or the CG PUSCH transmission occasions; where the configuration information is used to indicate usages of CG PUSCH transmission occasions in the CG configuration group or the at least one CG configuration.

Optionally, the configuration information includes at least one of the following:

a plurality of CG configurations, where the plurality of CG configurations include at least one CG configuration in the CG configuration group or the at least one CG configuration;

a CG configuration carrying the uplink control signaling;

an uplink control signaling enabling variable, where the uplink control signaling enabling variable is used to characterize whether the uplink control signaling is carried on a CG PUSCH of a CG configuration associated with the uplink control signaling;

at least one CG configuration jointly indicated by the uplink control signaling;

a first time window indicated by the uplink control signaling;

a quantity or a maximum quantity of CG PUSCH transmission occasions of at least one CG configuration jointly indicated by the uplink control signaling;

an uplink control signaling joint indication identifier, where the uplink control signaling joint indication identifier is used to characterize whether a CG configuration where the uplink control signaling joint indication identifier is located supports uplink control signaling joint indication;

first indication information, where the first indication information is used to indicate that the uplink control signaling indicates usages of CG PUSCH transmission occasions of a first type of CG configuration, and the first type includes Type 1 CG and/or Type 2 CG;

second indication information, where the second indication information is used to indicate that the uplink control signaling indicates usages of CG PUSCH transmission occasions of CG configurations associated with a same logical channel;

third indication information, where the third indication information is used to indicate related information of CG PUSCH transmission occasions whose usages are indicated by the uplink control signaling; or

a priority corresponding to the at least one CG configuration.

Optionally, the related information of the CG PUSCH transmission occasions whose usages are indicated by the uplink control signaling indicates at least one of the following:

that time-domain resources of the CG PUSCH transmission occasions overlap;

that frequency-domain resources of the CG PUSCH transmission occasions overlap; or

that spatial-domain resources of the CG PUSCH transmission occasions overlap.

Optionally, the priority corresponding to the at least one CG configuration includes:

a physical layer priority of the at least one CG configuration;
a priority of a logical channel associated with the at least one CG configuration;
a dedicated priority of the uplink control signaling; or
a dedicated priority of CG configurations jointly indicated by the uplink control signaling.

It should be noted that the network-side device provided in this embodiment of the present disclosure can implement all method steps implemented in the method embodiment where the execution subject is the network-side device, and can achieve the same technical effects. Details and beneficial effects of parts that are the same as those in the method embodiment are not repeated here.

FIG. 10 is a first schematic structural diagram of an apparatus for sending uplink control signaling provided by an embodiment of the present disclosure. As shown in FIG. 10, the apparatus for sending uplink control signaling 1000 includes:

an indicating module 1010, configured to indicate, via uplink control signaling, usages of configured grant physical uplink shared channel (CG PUSCH) transmission occasions in a CG configuration group or in at least one CG configuration;
where the CG configuration group includes the at least one CG configuration, and an association relationship exists among the at least one CG configuration.

Optionally, the association relationship among the at least one CG configuration includes at least one of the following:

the at least one CG configuration is associated with a same logical channel;
the at least one CG configuration has a same priority;
the at least one CG configuration corresponds to a same Type;
CG PUSCH transmission occasions of the at least one CG configuration are within a first time window;
the at least one CG configuration corresponds to different priorities, and a priority corresponding to a CG configuration used to carry the uplink control signaling among the at least one CG configuration is higher than or equal to a priority corresponding to other CG configurations among the at least one CG configuration;
time-domain resources corresponding to a part or all of CG PUSCH transmission occasions of the at least one CG configuration partially overlap or completely overlap;
frequency-domain resources corresponding to a part or all of CG PUSCH transmission occasions of the at least one CG configuration partially overlap or completely overlap;
spatial-domain resources corresponding to a part or all of CG PUSCH transmission occasions of the at least one CG configuration partially overlap or completely overlap; or
an association relationship indicated by downlink signaling or configured by a base station.

Optionally, the indicating module 1010 is further configured to:

indicate, via uplink control signaling, usages of CG PUSCH transmission occasions in the CG configuration group or the at least one CG configuration based on an ordering of CG PUSCH transmission occasions of the at least one CG configuration in the CG configuration group or an ordering of CG PUSCH transmission occasions of the at least one CG configuration;
where the ordering of the CG PUSCH transmission occasions of the at least one CG configuration is determined based on at least one of the following:
frequency-domain resource positions of the CG PUSCH transmission occasions of the at least one CG configuration;
time-domain resource positions of the CG PUSCH transmission occasions of the at least one CG configuration;
spatial-domain resource positions of the CG PUSCH transmission occasions of the at least one CG configuration;
an index value related to the at least one CG configuration; or
a priority corresponding to the at least one CG configuration.

Optionally, the index value related to the at least one CG configuration includes at least one of the following:

a configured grant index corresponding to the at least one CG configuration;
a Media Access Control (MAC) layer configured grant index corresponding to the at least one CG configuration;
an index of a logical channel associated with the at least one CG configuration; or
a dedicated index of at least one CG configuration jointly indicated by the uplink control signaling.

Optionally, the indicating module 1010 is further configured to:
indicate, via the uplink control signaling, usages of any two CG PUSCH transmission occasions whose resources overlap in the CG configuration group or in the at least one CG configuration.

Optionally, the indicating module 1010 is further configured to perform at least one of the following:

indicating, via the uplink control signaling, that one of the any two CG PUSCH transmission occasions whose resources overlap in the CG configuration group or in the at least one CG configuration is used or not used;
indicating, via the uplink control signaling, that a CG PUSCH transmission occasion with a lower priority among the any two CG PUSCH transmission occasions whose resources overlap in the CG configuration group or in the at least one CG configuration is used or not used, where the uplink control signaling is carried in a CG transmission corresponding to a CG PUSCH transmission occasion with a higher priority among the any two CG PUSCH transmission occasions whose resources overlap; or
indicating, via the uplink control signaling, that usages of the any two CG PUSCH transmission occasions whose resources overlap in the CG configuration group or in the at least one CG configuration are determined by the terminal.

Optionally, the indicating module 1010 is further configured to:

indicate, via uplink control signaling, usages of CG PUSCH transmission occasions in the CG configuration group or the at least one CG configuration based on configuration information sent by a network-side device and/or based on protocol-predefined information;
where the configuration information is used to configure related information of at least one of: the uplink control signaling, the CG configuration group, the at least one CG configuration, or the CG PUSCH transmission occasions.

Optionally, the configuration information includes at least one of the following:

a plurality of CG configurations, where the plurality of CG configurations include at least one CG configuration in the CG configuration group or the at least one CG configuration;
a CG configuration carrying the uplink control signaling;
an uplink control signaling enabling variable, where the uplink control signaling enabling variable is used to characterize whether the uplink control signaling is carried on a CG PUSCH of a CG configuration associated with the uplink control signaling;
at least one CG configuration jointly indicated by the uplink control signaling;
a first time window indicated by the uplink control signaling;
a quantity or a maximum quantity of CG PUSCH transmission occasions of at least one CG configuration jointly indicated by the uplink control signaling;
an uplink control signaling joint indication identifier, where the uplink control signaling joint indication identifier is used to characterize whether a CG configuration where the uplink control signaling joint indication identifier is located supports uplink control signaling joint indication;
first indication information, where the first indication information is used to indicate that the uplink control signaling indicates usages of CG PUSCH transmission occasions of a first type of CG configuration, and the first type includes Type 1 CG and/or Type 2 CG;
second indication information, where the second indication information is used to indicate that the uplink control signaling indicates usages of CG PUSCH transmission occasions of CG configurations associated with a same logical channel;
third indication information, where the third indication information is used to indicate related information of CG PUSCH transmission occasions whose usages are indicated by the uplink control signaling; or
a priority corresponding to the at least one CG configuration.

Optionally, the related information of the CG PUSCH transmission occasions whose usages are indicated by the uplink control signaling indicates at least one of the following:

that time-domain resources of the CG PUSCH transmission occasions overlap;
that frequency-domain resources of the CG PUSCH transmission occasions overlap; or
that spatial-domain resources of the CG PUSCH transmission occasions overlap.

Optionally, the protocol-predefined information includes at least one of the following:

a priority corresponding to at least one CG configuration to which the CG PUSCH transmission occasions whose usages are indicated by the uplink control signaling belong;

the uplink control signaling indicating usages of CG PUSCH transmission occasions of a specified CG configuration;

the uplink control signaling being used to indicate usages of CG PUSCH transmission occasions of a first type of CG configuration, where the first type includes Type 1 CG and/or Type 2 CG;

the uplink control signaling being used to indicate usages of CG PUSCH transmission occasions of CG configurations associated with a same logical channel;

the uplink control signaling being used to indicate usages of CG PUSCH transmission occasions whose time-domain resources overlap;

the uplink control signaling being used to indicate usages of CG PUSCH transmission occasions whose frequency-domain resources overlap; or

the uplink control signaling being used to indicate usages of CG PUSCH transmission occasions whose spatial-domain resources overlap.

Optionally, the priority corresponding to the at least one CG configuration includes:

a physical layer priority of the at least one CG configuration;
a priority of a logical channel associated with the at least one CG configuration;
a dedicated priority of the uplink control signaling; or
a dedicated priority of CG configurations jointly indicated by the uplink control signaling.

It should be noted that the apparatus provided in this embodiment of the present disclosure can implement all method steps implemented in the method embodiment and can achieve the same technical effects. Details and beneficial effects of parts that are the same as those in the method embodiment are not repeated here.

FIG. 11 is a second schematic structural diagram of an apparatus for sending uplink control signaling provided by an embodiment of the present disclosure. As shown in FIG. 11, the apparatus for sending uplink control signaling 1100 includes:

a sending module 1110, configured to send uplink control signaling to a terminal;

where the uplink control signaling is used to indicate usages of CG PUSCH transmission occasions in a CG configuration group or in at least one CG configuration; the CG configuration group includes the at least one CG configuration, and an association relationship exists among the at least one CG configuration.

Optionally, the association relationship among the at least one CG configuration includes at least one of the following:

the at least one CG configuration is associated with a same logical channel;
the at least one CG configuration has a same priority;
the at least one CG configuration corresponds to a same Type;
CG PUSCH transmission occasions of the at least one CG configuration are within a first time window;
the at least one CG configuration corresponds to different priorities, and a priority corresponding to a CG configuration used to carry the uplink control signaling among the at least one CG configuration is higher than or equal to a priority corresponding to other CG configurations among the at least one CG configuration;
time-domain resources corresponding to a part or all of CG PUSCH transmission occasions of the at least one CG configuration partially overlap or completely overlap;
frequency-domain resources corresponding to a part or all of CG PUSCH transmission occasions of the at least one CG configuration partially overlap or completely overlap;
spatial-domain resources corresponding to a part or all of CG PUSCH transmission occasions of the at least one CG configuration partially overlap or completely overlap; or
an association relationship indicated by downlink signaling or configured by a base station.

Optionally, the uplink control signaling being used to indicate usages of CG PUSCH transmission occasions in a CG configuration group or in at least one CG configuration, includes:

the uplink control signaling being used to indicate usages of CG PUSCH transmission occasions in the CG configuration group or the at least one CG configuration based on an ordering of CG PUSCH transmission occasions of the at least one CG configuration in the CG configuration group or an ordering of CG PUSCH transmission occasions of the at least one CG configuration;
where the ordering of the CG PUSCH transmission occasions of the at least one CG configuration is determined based on at least one of the following:
frequency-domain resource positions of the CG PUSCH transmission occasions of the at least one CG configuration;
time-domain resource positions of the CG PUSCH transmission occasions of the at least one CG configuration;
spatial-domain resource positions of the CG PUSCH transmission occasions of the at least one CG configuration;
an index value related to the at least one CG configuration; or
a priority corresponding to the at least one CG configuration.

Optionally, the index value related to the at least one CG configuration includes at least one of the following:

a configured grant index corresponding to the at least one CG configuration;
a Media Access Control (MAC) layer configured grant index corresponding to the at least one CG configuration;
an index of a logical channel associated with the at least one CG configuration; or
a dedicated index of at least one CG configuration jointly indicated by the uplink control signaling.

Optionally, the uplink control signaling being used to indicate usages of CG PUSCH transmission occasions in a CG configuration group or in at least one CG configuration, includes:
the uplink control signaling being used to indicate usages of any two CG PUSCH transmission occasions whose resources overlap in the CG configuration group or in the at least one CG configuration.
Optionally, the uplink control signaling being used to indicate usages of any two CG PUSCH transmission occasions whose resources overlap in the CG configuration group or in the at least one CG configuration, includes at least one of the following:

the uplink control signaling being used to indicate that one of the any two CG PUSCH transmission occasions whose resources overlap in the CG configuration group or in the at least one CG configuration is used or not used;
the uplink control signaling being used to indicate that a CG PUSCH transmission occasion with a lower priority among the any two CG PUSCH transmission occasions whose resources overlap in the CG configuration group or in the at least one CG configuration is used or not used, where the uplink control signaling is carried in a CG transmission corresponding to a CG PUSCH transmission occasion with a higher priority among the any two CG PUSCH transmission occasions whose resources overlap; or
the uplink control signaling being used to indicate that usages of the any two CG PUSCH transmission occasions whose resources overlap in the CG configuration group or in the at least one CG configuration are determined by the terminal.

Optionally, the apparatus further includes:
a configuration information sending module, configured to send configuration information to the terminal, where the configuration information is used to configure related information of at least one of: the uplink control signaling, the CG configuration group, the at least one CG configuration, or the CG PUSCH transmission occasions; where the configuration information is used to indicate usages of CG PUSCH transmission occasions in the CG configuration group or the at least one CG configuration.
Optionally, the configuration information includes at least one of the following:

a plurality of CG configurations, where the plurality of CG configurations include at least one CG configuration in the CG configuration group or the at least one CG configuration;
a CG configuration carrying the uplink control signaling;
an uplink control signaling enabling variable, where the uplink control signaling enabling variable is used to characterize whether the uplink control signaling is carried on a CG PUSCH of a CG configuration associated with the uplink control signaling;
at least one CG configuration jointly indicated by the uplink control signaling;
a first time window indicated by the uplink control signaling;
a quantity or a maximum quantity of CG PUSCH transmission occasions of at least one CG configuration jointly indicated by the uplink control signaling;
an uplink control signaling joint indication identifier, where the uplink control signaling joint indication identifier is used to characterize whether a CG configuration where the uplink control signaling joint indication identifier is located supports uplink control signaling joint indication;
first indication information, where the first indication information is used to indicate that the uplink control signaling indicates usages of CG PUSCH transmission occasions of a first type of CG configuration, and the first type includes Type 1 CG and/or Type 2 CG;
second indication information, where the second indication information is used to indicate that the uplink control signaling indicates usages of CG PUSCH transmission occasions of CG configurations associated with a same logical channel;

third indication information, where the third indication information is used to indicate related information of CG PUSCH transmission occasions whose usages are indicated by the uplink control signaling; or

a priority corresponding to the at least one CG configuration.

Optionally, the related information of the CG PUSCH transmission occasions whose usages are indicated by the uplink control signaling indicates at least one of the following:

that time-domain resources of the CG PUSCH transmission occasions overlap;

that frequency-domain resources of the CG PUSCH transmission occasions overlap; or

that spatial-domain resources of the CG PUSCH transmission occasions overlap.

Optionally, the priority corresponding to the at least one CG configuration includes:

a physical layer priority of the at least one CG configuration;

a priority of a logical channel associated with the at least one CG configuration;

a dedicated priority of the uplink control signaling; or

a dedicated priority of CG configurations jointly indicated by the uplink control signaling.

It should be noted that the apparatus provided in this embodiment of the present disclosure can implement all method steps implemented in the method embodiment and can achieve the same technical effects. Details and beneficial effects of parts that are the same as those in the method embodiment are not repeated here.

It should be noted that the division of units in the embodiments of the present disclosure is schematic, merely being a logical function division, and there may be other division methods in actual implementation. In addition, the functional units in various embodiments of the present disclosure may be integrated into one processing unit, or each unit may exist physically alone, or two or more units may be integrated into one unit. The above integrated units can be implemented in the form of hardware or software functional units.

If the integrated unit is implemented in the form of a software functional unit and sold or used as an independent product, it can be stored in a processor-readable storage medium. Based on this understanding, the technical solution of the present disclosure essentially, or the part contributing to the related art, or all or part of the technical solution may be embodied in the form of a software product. The computer software product is stored in a storage medium and includes several instructions for causing a computer device (which may be a personal computer, server, network device, etc.) or a processor to perform all or part of the steps of the methods described in the various embodiments of the present disclosure. The aforementioned storage medium includes: U disk, mobile hard disk, Read-Only Memory (ROM), Random Access Memory (RAM), magnetic disk, optical disk, and various media that can store program codes.

On the other hand, an embodiment of the present disclosure further provides a processor-readable storage medium, where the processor-readable storage medium stores a computer program, and the computer program is used to cause a processor to execute the methods provided by the above various embodiments.

The processor-readable storage medium may be any available medium or data storage device that the processor can access, including but not limited to magnetic memory (e.g., floppy disk, hard disk, magnetic tape, Magneto-Optical disk (MO), etc.), optical memory (e.g., CD, DVD, BD, HVD, etc.), and semiconductor memory (e.g., ROM, EPROM, EEPROM, non-volatile memory (NAND FLASH), Solid State Drive (SSD)), etc.

Those skilled in the art will appreciate that embodiments of the present disclosure may be provided as a method, system, or computer program product. Accordingly, the present disclosure may take the form of an entirely hardware embodiment, an entirely software embodiment, or an embodiment combining software and hardware aspects. Furthermore, the present disclosure may take the form of a computer program product embodied on one or more computer-usable storage media (including but not limited to disk storage and optical storage, etc.) having computer-usable program code embodied therein.

The present disclosure is described with reference to flowchart illustrations and/or block diagrams of methods, apparatus (systems), and computer program products according to embodiments of the present disclosure. It will be understood that each flow and/or block of the flowchart illustrations and/or block diagrams, and combinations of flows and/or blocks in the flowchart illustrations and/or block diagrams, can be implemented by computer program instructions. These computer program instructions may be provided to a processor of a general purpose computer, special purpose computer, embedded processor, or other programmable data processing apparatus to produce a machine, such that the instructions, which execute via the processor of the computer or other programmable data processing apparatus, create means for implementing the functions specified in one or more flows of the flowchart and/or one or more blocks of the block diagram.

These computer program instructions may also be stored in a processor-readable memory that can direct a computer or other programmable data processing apparatus to function in a particular manner, such that the instructions stored in the processor-readable memory produce an article of manufacture including instruction means which implement the function specified in one or more flows of the flowchart and/or one or more blocks of the block diagram.

These computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions specified in one or more flows of the flowchart and/or one or more blocks of the block diagram.

Obviously, those skilled in the art can make various modifications and variations to the present disclosure without departing from the spirit and scope of the present disclosure. Thus, if such modifications and variations of the present disclosure fall within the scope of the claims of the present disclosure and their equivalents, the present disclosure is intended to cover these modifications and variations as well.

**Claims**

1. A method for sending uplink control signaling, applied to a terminal, comprising:

   indicating, via an uplink control signaling, usages of configured grant physical uplink shared channel (CG PUSCH) transmission occasions in a CG configuration group or at least one CG configuration;
   wherein the CG configuration group comprises at least one CG configuration, and an association relationship exists among the at least one CG configuration.

2. The method for sending uplink control signaling according to claim 1, wherein the association relationship among the at least one CG configuration comprises at least one of:

   the at least one CG configuration being associated with a same logical channel;
   the at least one CG configuration having a same priority;
   the at least one CG configuration corresponding to a same type;
   the CG PUSCH transmission occasions in the at least one CG configuration being within a first time window;
   the at least one CG configuration corresponding to different priorities, and a priority corresponding to a CG configuration used to carry the uplink control signaling in the at least one CG configuration being higher than or equal to a priority corresponding to a CG configuration other than the CG configuration used to carry the uplink control signaling in the at least one CG configuration;
   time-domain resources corresponding to a part or all of the CG PUSCH transmission occasions in the at least one CG configuration partially overlapping or completely overlapping;
   frequency-domain resources corresponding to a part or all of the CG PUSCH transmission occasions in the at least one CG configuration partially overlapping or completely overlapping;
   spatial-domain resources corresponding to a part or all of the CG PUSCH transmission occasions in the at least one CG configuration partially overlapping or completely overlapping; or
   an association relationship indicated via a downlink signaling or configured by a base station.

3. The method for sending uplink control signaling according to claim 1, wherein indicating, via the uplink control signaling, the usages of the CG PUSCH transmission occasions in the CG configuration group or the at least one CG configuration comprises:

   indicating, via the uplink control signaling, the usages of the CG PUSCH transmission occasions in the CG configuration group or the at least one CG configuration based on an ordering of the CG PUSCH transmission occasions in the at least one CG configuration in the CG configuration group or an ordering of the CG PUSCH transmission occasions in the at least one CG configuration;
   wherein the ordering of the CG PUSCH transmission occasions in the at least one CG configuration is determined based on at least one of:

   frequency-domain resource positions of the CG PUSCH transmission occasions in the at least one CG configuration;
   time-domain resource positions of the CG PUSCH transmission occasions in the at least one CG configuration;

spatial-domain resource positions of the CG PUSCH transmission occasions in the at least one CG configuration;

an index value related to the at least one CG configuration; or

a priority corresponding to the at least one CG configuration.

4. The method for sending uplink control signaling according to claim 3, wherein the index value related to the at least one CG configuration comprises at least one of:

a configured grant index corresponding to the at least one CG configuration;

a media access control (MAC) layer configured grant index corresponding to the at least one CG configuration;

an index of a logical channel associated with the at least one CG configuration; or

a dedicated index of at least one CG configuration jointly indicated via the uplink control signaling.

5. The method for sending uplink control signaling according to any one of claims 1 to 4, wherein indicating, via the uplink control signaling, the usages of the CG PUSCH transmission occasions in the CG configuration group or the at least one CG configuration comprises:
indicating, via the uplink control signaling, usages of any two CG PUSCH transmission occasions of which resources overlap in the CG configuration group or in the at least one CG configuration.

6. The method for sending uplink control signaling according to claim 5, wherein indicating, via the uplink control signaling, the usages of the any two CG PUSCH transmission occasions of which the resources overlap in the CG configuration group or in the at least one CG configuration comprises at least one of:

indicating, via the uplink control signaling, that one of the any two CG PUSCH transmission occasions of which the resources overlap in the CG configuration group or in the at least one CG configuration is used or not used;

indicating, via the uplink control signaling, that a CG PUSCH transmission occasion with a lower priority of the any two CG PUSCH transmission occasions of which the resources overlap in the CG configuration group or in the at least one CG configuration is used or not used, wherein the uplink control signaling is carried in a CG transmission corresponding to a CG PUSCH transmission occasion with a higher priority of the any two CG PUSCH transmission occasions of which the resources overlap; or

indicating, via the uplink control signaling, that the usages of the any two CG PUSCH transmission occasions of which the resources overlap in the CG configuration group or in the at least one CG configuration are determined by the terminal.

7. The method for sending uplink control signaling according to any one of claims 1 to 4, wherein indicating, via the uplink control signaling, the usages of the CG PUSCH transmission occasions in the CG configuration group or the at least one CG configuration comprises:

indicating, via the uplink control signaling, the usages of the CG PUSCH transmission occasions in the CG configuration group or the at least one CG configuration based on configuration information sent by a network-side device and/or based on protocol-predefined information;

wherein the configuration information is used to configure related information of at least one of: the uplink control signaling, the CG configuration group, the at least one CG configuration, or the CG PUSCH transmission occasions.

8. The method for sending uplink control signaling according to claim 7, wherein the configuration information comprises at least one of:

a plurality of CG configurations, wherein the plurality of CG configurations comprise at least one CG configuration in the CG configuration group or the at least one CG configuration;

a CG configuration carrying the uplink control signaling;

an uplink control signaling enabling variable used to represent whether the uplink control signaling is carried in a CG PUSCH of a CG configuration associated with the uplink control signaling;

at least one CG configuration jointly indicated via the uplink control signaling;

a first time window indicated via the uplink control signaling;

a quantity or a maximum quantity of CG PUSCH transmission occasions in at least one CG configuration jointly indicated via the uplink control signaling;

an uplink control signaling joint indication identifier used to represent whether a CG configuration where the uplink control signaling joint indication identifier is located supports an uplink control signaling joint indication;

first indication information used to indicate that the uplink control signaling indicates usages of CG PUSCH transmission occasions in a first type of CG configuration, wherein the first type comprises a Type 1 CG and/or a Type 2 CG;

second indication information used to indicate that the uplink control signaling indicates usages of CG PUSCH transmission occasions in CG configurations associated with a same logical channel;

third indication information used to indicate related information of CG PUSCH transmission occasions of which usages are indicated via the uplink control signaling; or

a priority corresponding to the at least one CG configuration.

9. The method for sending uplink control signaling according to claim 8, wherein the related information of the CG PUSCH transmission occasions of which the usages are indicated via the uplink control signaling indicates at least one of:

that time-domain resources of the CG PUSCH transmission occasions overlap;

that frequency-domain resources of the CG PUSCH transmission occasions overlap; or

that spatial-domain resources of the CG PUSCH transmission occasions overlap.

10. The method for sending uplink control signaling according to claim 7, wherein the protocol-predefined information indicates at least one of:

a priority corresponding to at least one CG configuration to which the CG PUSCH transmission occasions of which the usages are indicated via the uplink control signaling belongs;

that the uplink control signaling is used to indicate usages of CG PUSCH transmission occasions in a specified CG configuration;

that the uplink control signaling is used to indicate usages of CG PUSCH transmission occasions in a first type of CG configuration, wherein the first type comprises a Type 1 CG and/or a Type 2 CG;

that the uplink control signaling is used to indicate usages of CG PUSCH transmission occasions of CG configurations associated with a same logical channel;

that the uplink control signaling is used to indicate usages of CG PUSCH transmission occasions of which time-domain resources overlap;

that the uplink control signaling is used to indicate usages of CG PUSCH transmission occasions of which frequency-domain resources overlap; or

that the uplink control signaling is used to indicate usages of CG PUSCH transmission occasions of which spatial-domain resources overlap.

11. The method for sending uplink control signaling according to claim 3 or 8 or 10, wherein the priority corresponding to the at least one CG configuration comprises:

a physical layer priority of the at least one CG configuration;

a priority of a logical channel associated with the at least one CG configuration;

a dedicated priority of the uplink control signaling;

a dedicated priority of a CG configuration jointly indicated via the uplink control signaling.

12. A method for sending uplink control signaling, applied to a network-side device, comprising:

sending an uplink control signaling to a terminal;

wherein the uplink control signaling is used to indicate usages of configured grant physical uplink shared channel (CG PUSCH) transmission occasions in a CG configuration group or at least one CG configuration; the CG configuration group comprises the at least one CG configuration, and an association relationship exists among the at least one CG configuration.

13. The method for sending uplink control signaling according to claim 12, wherein the association relationship among the at least one CG configuration comprises at least one of:

the at least one CG configuration being associated with a same logical channel;

the at least one CG configuration having a same priority;

the at least one CG configuration corresponding to a same type;

the CG PUSCH transmission occasions in the at least one CG configuration being within a first time window;
the at least one CG configuration corresponding to different priorities, and a priority corresponding to a CG configuration used to carry the uplink control signaling in the at least one CG configuration being higher than or equal to a priority corresponding to a CG configuration other than the CG configuration used to carry the uplink control signaling in the at least one CG configuration;
time-domain resources corresponding to a part or all of the CG PUSCH transmission occasions in the at least one CG configuration partially overlapping or completely overlapping;
frequency-domain resources corresponding to a part or all of the CG PUSCH transmission occasions in the at least one CG configuration partially overlapping or completely overlapping;
spatial-domain resources corresponding to a part or all of the CG PUSCH transmission occasions in the at least one CG configuration partially overlapping or completely overlapping; or
an association relationship indicated via a downlink signaling or configured by a base station.

14. The method for sending uplink control signaling according to claim 12, wherein the uplink control signaling being used to indicate the usages of the CG PUSCH transmission occasions in the CG configuration group or the at least one CG configuration comprises:

the uplink control signaling being used to indicate the usages of the CG PUSCH transmission occasions in the CG configuration group or the at least one CG configuration based on an ordering of the CG PUSCH transmission occasions in the at least one CG configuration in the CG configuration group or an ordering of the CG PUSCH transmission occasions in the at least one CG configuration;
wherein the ordering of the CG PUSCH transmission occasions in the at least one CG configuration is determined based on at least one of:

frequency-domain resource positions of the CG PUSCH transmission occasions in the at least one CG configuration;
time-domain resource positions of the CG PUSCH transmission occasions in the at least one CG configuration;
spatial-domain resource positions of the CG PUSCH transmission occasions in the at least one CG configuration;
an index value related to the at least one CG configuration; or
a priority corresponding to the at least one CG configuration.

15. The method for sending uplink control signaling according to claim 14, wherein the index value related to the at least one CG configuration comprises at least one of:

a configured grant index corresponding to the at least one CG configuration;
a media access control (MAC) layer configured grant index corresponding to the at least one CG configuration;
an index of a logical channel associated with the at least one CG configuration; or
a dedicated index of at least one CG configuration jointly indicated via the uplink control signaling.

16. The method for sending uplink control signaling according to any one of claims 12 to 15, wherein the uplink control signaling being used to indicate the usages of the CG PUSCH transmission occasions in the CG configuration group or the at least one CG configuration comprises:
the uplink control signaling being used to indicate usages of any two CG PUSCH transmission occasions of which resources overlap in the CG configuration group or in the at least one CG configuration.

17. The method for sending uplink control signaling according to claim 16, wherein the uplink control signaling being used to indicate the usages of the any two CG PUSCH transmission occasions of which the resources overlap in the CG configuration group or in the at least one CG configuration comprises at least one of:

the uplink control signaling being used to indicate that a usage of one of the any two CG PUSCH transmission occasions of which the resources overlap in the CG configuration group or in the at least one CG configuration is used or not used;
the uplink control signaling being used to indicate that a usage of a CG PUSCH transmission occasion with a lower priority of the any two CG PUSCH transmission occasions of which the resources overlap in the CG configuration group or in the at least one CG configuration is used or not used, wherein the uplink control signaling is carried in a CG transmission corresponding to a CG PUSCH transmission occasion with a higher priority of the any two CG PUSCH transmission occasions of which the resources overlap; or

the uplink control signaling being used to indicate that the usages of the any two CG PUSCH transmission occasions of which the resources overlap in the CG configuration group or in the at least one CG configuration are determined by the terminal.

18. The method for sending uplink control signaling according to claim 16, further comprising:

sending configuration information to the terminal, the configuration information being used to configure related information of at least one of: the uplink control signaling, the CG configuration group, the at least one CG configuration, or the CG PUSCH transmission occasions; wherein the configuration information is used to indicate the usages of the CG PUSCH transmission occasions in the CG configuration group or the at least one CG configuration.

19. The method for sending uplink control signaling according to claim 18, wherein the configuration information comprises at least one of:

a plurality of CG configurations, wherein the plurality of CG configurations comprise at least one CG configuration in the CG configuration group or the at least one CG configuration;

a CG configuration carrying the uplink control signaling;

an uplink control signaling enabling variable used to represent whether the uplink control signaling is carried in a CG PUSCH of a CG configuration associated with the uplink control signaling;

at least one CG configuration jointly indicated via the uplink control signaling;

a first time window indicated via the uplink control signaling;

a quantity or a maximum quantity of CG PUSCH transmission occasions in at least one CG configuration jointly indicated via the uplink control signaling;

an uplink control signaling joint indication identifier used to represent whether a CG configuration where the uplink control signaling joint indication identifier is located supports an uplink control signaling joint indication;

first indication information used to indicate that the uplink control signaling indicates usages of CG PUSCH transmission occasions in a first type of CG configuration, wherein the first type comprises a Type 1 CG and/or a Type 2 CG;

second indication information used to indicate that the uplink control signaling indicates usages of CG PUSCH transmission occasions in CG configurations associated with a same logical channel;

third indication information used to indicate related information of CG PUSCH transmission occasions of which usages are indicated via the uplink control signaling; or

a priority corresponding to the at least one CG configuration.

20. The method for sending uplink control signaling according to claim 19, wherein the related information of the CG PUSCH transmission occasions of which the usages are indicated via the uplink control signaling indicates at least one of:

that time-domain resources of the CG PUSCH transmission occasions overlap;

that frequency-domain resources of the CG PUSCH transmission occasions overlap; or

that spatial-domain resources of the CG PUSCH transmission occasions overlap.

21. The method for sending uplink control signaling according to claim 14 or 19, wherein the priority corresponding to the at least one CG configuration comprises:

a physical layer priority of the at least one CG configuration;

a priority of a logical channel associated with the at least one CG configuration;

a dedicated priority of the uplink control signaling;

a dedicated priority of a CG configuration jointly indicated via the uplink control signaling.

22. A terminal, comprising a memory, a transceiver, and a processor, wherein:

the memory is configured to store a computer program, the transceiver is configured to send and receive data under a control of the processor, and the processor is configured to read the computer program from the memory and perform:

indicating, via an uplink control signaling, usages of configured grant physical uplink shared channel (CG PUSCH) transmission occasions in a CG configuration group or at least one CG configuration;

wherein the CG configuration group comprises at least one CG configuration, and an association relationship exists among the at least one CG configuration.

23. The terminal according to claim 22, wherein the association relationship among the at least one CG configuration comprises at least one of:

the at least one CG configuration being associated with a same logical channel;
the at least one CG configuration having a same priority;
the at least one CG configuration corresponding to a same type;
the CG PUSCH transmission occasions in the at least one CG configuration being within a first time window;
the at least one CG configuration corresponding to different priorities, and a priority corresponding to a CG configuration used to carry the uplink control signaling in the at least one CG configuration being higher than or equal to a priority corresponding to a CG configuration other than the CG configuration used to carry the uplink control signaling in the at least one CG configuration;
time-domain resources corresponding to a part or all of the CG PUSCH transmission occasions in the at least one CG configuration partially overlapping or completely overlapping;
frequency-domain resources corresponding to a part or all of the CG PUSCH transmission occasions in the at least one CG configuration partially overlapping or completely overlapping;
spatial-domain resources corresponding to a part or all of the CG PUSCH transmission occasions in the at least one CG configuration partially overlapping or completely overlapping; or
an association relationship indicated via a downlink signaling or configured by a base station.

24. The terminal according to claim 22, wherein the indicating, via the uplink control signaling, the usages of the CG PUSCH transmission occasions in the CG configuration group or the at least one CG configuration comprises:

indicating, via the uplink control signaling, the usages of the CG PUSCH transmission occasions in the CG configuration group or the at least one CG configuration based on an ordering of the CG PUSCH transmission occasions in the at least one CG configuration in the CG configuration group or an ordering of the CG PUSCH transmission occasions in the at least one CG configuration;
wherein the ordering of the CG PUSCH transmission occasions in the at least one CG configuration is determined based on at least one of:

frequency-domain resource positions of the CG PUSCH transmission occasions in the at least one CG configuration;
time-domain resource positions of the CG PUSCH transmission occasions in the at least one CG configuration;
spatial-domain resource positions of the CG PUSCH transmission occasions in the at least one CG configuration;
an index value related to the at least one CG configuration; or
a priority corresponding to the at least one CG configuration.

25. The terminal according to claim 24, wherein the index value related to the at least one CG configuration comprises at least one of:

a configured grant index corresponding to the at least one CG configuration;
a media access control (MAC) layer configured grant index corresponding to the at least one CG configuration;
an index of a logical channel associated with the at least one CG configuration; or
a dedicated index of at least one CG configuration jointly indicated via the uplink control signaling.

26. The terminal according to any one of claims 22 to 25, wherein the indicating, via the uplink control signaling, the usages of the CG PUSCH transmission occasions in the CG configuration group or the at least one CG configuration comprises:
indicating, via the uplink control signaling, usages of any two CG PUSCH transmission occasions of which resources overlap in the CG configuration group or in the at least one CG configuration.

27. The terminal according to claim 26, wherein the indicating, via the uplink control signaling, the usages of the any two CG PUSCH transmission occasions of which the resources overlap in the CG configuration group or in the at least one CG configuration comprises at least one of:

indicating, via the uplink control signaling, that a usage of one of the any two CG PUSCH transmission occasions of which the resources overlap in the CG configuration group or in the at least one CG configuration is used or not used;

indicating, via the uplink control signaling, that a usage of a CG PUSCH transmission occasion with a lower priority of the any two CG PUSCH transmission occasions of which the resources overlap in the CG configuration group or in the at least one CG configuration is used or not used, wherein the uplink control signaling is carried in a CG transmission corresponding to a CG PUSCH transmission occasion with a higher priority of the any two CG PUSCH transmission occasions of which the resources overlap; or

indicating, via the uplink control signaling, that the usages of the any two CG PUSCH transmission occasions of which the resources overlap in the CG configuration group or in the at least one CG configuration are determined by the terminal.

28. The terminal according to any one of claims 22 to 25, wherein the indicating, via the uplink control signaling, the usages of the CG PUSCH transmission occasions in the CG configuration group or the at least one CG configuration comprises:

indicating, via the uplink control signaling, the usages of the CG PUSCH transmission occasions in the CG configuration group or the at least one CG configuration based on configuration information sent by a network-side device and/or based on protocol-predefined information;

wherein the configuration information is used to configure related information of at least one of: the uplink control signaling, the CG configuration group, the at least one CG configuration, or the CG PUSCH transmission occasions.

29. The terminal according to claim 28, wherein the configuration information comprises at least one of:

a plurality of CG configurations, wherein the plurality of CG configurations comprise at least one CG configuration in the CG configuration group or the at least one CG configuration;

a CG configuration carrying the uplink control signaling;

an uplink control signaling enabling variable used to represent whether the uplink control signaling is carried in a CG PUSCH of a CG configuration associated with the uplink control signaling;

at least one CG configuration jointly indicated via the uplink control signaling;

a first time window indicated via the uplink control signaling;

a quantity or a maximum quantity of CG PUSCH transmission occasions in at least one CG configuration jointly indicated via the uplink control signaling;

an uplink control signaling joint indication identifier used to represent whether a CG configuration where the uplink control signaling joint indication identifier is located supports an uplink control signaling joint indication;

first indication information used to indicate that the uplink control signaling indicates usages of CG PUSCH transmission occasions in a first type of CG configuration, wherein the first type comprises a Type 1 CG and/or a Type 2 CG;

second indication information used to indicate that the uplink control signaling indicates usages of CG PUSCH transmission occasions in CG configurations associated with a same logical channel;

third indication information used to indicate related information of CG PUSCH transmission occasions of which usages are indicated via the uplink control signaling; or

a priority corresponding to the at least one CG configuration.

30. The terminal according to claim 29, wherein the related information of the CG PUSCH transmission occasions of which the usages are indicated via the uplink control signaling indicates at least one of:

that time-domain resources of the CG PUSCH transmission occasions overlap;

that frequency-domain resources of the CG PUSCH transmission occasions overlap; or

that spatial-domain resources of the CG PUSCH transmission occasions overlap.

31. The terminal according to claim 28, wherein the protocol-predefined information indicates at least one of:

a priority corresponding to at least one CG configuration to which the CG PUSCH transmission occasions of which the usages are indicated via the uplink control signaling belongs;

that the uplink control signaling is used to indicate usages of CG PUSCH transmission occasions in a specified CG configuration;

that the uplink control signaling is used to indicate usages of CG PUSCH transmission occasions in a first type of CG configuration, wherein the first type comprises a Type 1 CG and/or a Type 2 CG;

that the uplink control signaling is used to indicate usages of CG PUSCH transmission occasions of CG configurations associated with a same logical channel;

that the uplink control signaling is used to indicate usages of CG PUSCH transmission occasions of which time-domain resources overlap;

that the uplink control signaling is used to indicate usages of CG PUSCH transmission occasions of which frequency-domain resources overlap; or

that the uplink control signaling is used to indicate usages of CG PUSCH transmission occasions of which spatial-domain resources overlap.

32. The terminal according to claim 24, 29 or 31, wherein the priority corresponding to the at least one CG configuration comprises:

a physical layer priority of the at least one CG configuration;
a priority of a logical channel associated with the at least one CG configuration;
a dedicated priority of the uplink control signaling;
a dedicated priority of a CG configuration jointly indicated via the uplink control signaling.

33. A network-side device, comprising a memory, a transceiver, and a processor, wherein
the memory is configured to store a computer program, the transceiver is configured to send and receive data under a control of the processor, and the processor is configured to read the computer program from the memory and perform:

sending an uplink control signaling to a terminal;
wherein the uplink control signaling is used to indicate usages of CG PUSCH transmission occasions in a CG configuration group or at least one CG configuration; the CG configuration group comprises the at least one CG configuration, and an association relationship exists among the at least one CG configuration.

34. The network-side device according to claim 33, wherein the association relationship among the at least one CG configuration comprises at least one of:

the at least one CG configuration being associated with a same logical channel;
the at least one CG configuration having a same priority;
the at least one CG configuration corresponding to a same type;
the CG PUSCH transmission occasions in the at least one CG configuration being within a first time window;
the at least one CG configuration corresponding to different priorities, and a priority corresponding to a CG configuration used to carry the uplink control signaling in the at least one CG configuration being higher than or equal to a priority corresponding to a CG configuration other than the CG configuration used to carry the uplink control signaling in the at least one CG configuration;
time-domain resources corresponding to a part or all of the CG PUSCH transmission occasions in the at least one CG configuration partially overlapping or completely overlapping;
frequency-domain resources corresponding to a part or all of the CG PUSCH transmission occasions in the at least one CG configuration partially overlapping or completely overlapping;
spatial-domain resources corresponding to a part or all of the CG PUSCH transmission occasions in the at least one CG configuration partially overlapping or completely overlapping; or
an association relationship indicated via a downlink signaling or configured by a base station.

35. The network-side device according to claim 33, wherein the uplink control signaling being used to indicate the usages of the CG PUSCH transmission occasions in the CG configuration group or the at least one CG configuration comprises:

the uplink control signaling being used to indicate the usages of the CG PUSCH transmission occasions in the CG configuration group or the at least one CG configuration based on an ordering of the CG PUSCH transmission occasions in the at least one CG configuration in the CG configuration group or an ordering of the CG PUSCH transmission occasions in the at least one CG configuration;
wherein the ordering of the CG PUSCH transmission occasions in the at least one CG configuration is determined based on at least one of:

frequency-domain resource positions of the CG PUSCH transmission occasions in the at least one CG configuration;

time-domain resource positions of the CG PUSCH transmission occasions in the at least one CG configuration;

spatial-domain resource positions of the CG PUSCH transmission occasions in the at least one CG configuration;

an index value related to the at least one CG configuration; or

a priority corresponding to the at least one CG configuration.

36. The network-side device according to claim 35, wherein the index value related to the at least one CG configuration comprises at least one of:

a configured grant index corresponding to the at least one CG configuration;

a media access control (MAC) layer configured grant index corresponding to the at least one CG configuration;

an index of a logical channel associated with the at least one CG configuration; or

a dedicated index of at least one CG configuration jointly indicated via the uplink control signaling.

37. The network-side device according to any one of claims 33 to 36, wherein the uplink control signaling being used to indicate the usages of the CG PUSCH transmission occasions in the CG configuration group or the at least one CG configuration comprises:

the uplink control signaling being used to indicate usages of any two CG PUSCH transmission occasions of which resources overlap in the CG configuration group or in the at least one CG configuration.

38. The network-side device according to claim 37, wherein the uplink control signaling being used to indicate the usages of the any two CG PUSCH transmission occasions of which the resources overlap in the CG configuration group or in the at least one CG configuration comprises at least one of:

the uplink control signaling being used to indicate that a usage of one of the any two CG PUSCH transmission occasions of which the resources overlap in the CG configuration group or in the at least one CG configuration is used or not used;

the uplink control signaling being used to indicate that a usage of a CG PUSCH transmission occasion with a lower priority of the any two CG PUSCH transmission occasions of which the resources overlap in the CG configuration group or in the at least one CG configuration is used or not used, wherein the uplink control signaling is carried in a CG transmission corresponding to a CG PUSCH transmission occasion with a higher priority of the any two CG PUSCH transmission occasions of which the resources overlap; or

the uplink control signaling being used to indicate that the usages of the any two CG PUSCH transmission occasions of which the resources overlap in the CG configuration group or in the at least one CG configuration are determined by the terminal.

39. The network-side device according to claim 38, wherein the processor is further configured to:
send configuration information to the terminal, wherein the configuration information is used to configure related information of at least one of: the uplink control signaling, the CG configuration group, the at least one CG configuration, or the CG PUSCH transmission occasions; wherein the configuration information is used to indicate the usages of the CG PUSCH transmission occasions in the CG configuration group or the at least one CG configuration.

40. The network-side device according to claim 39, wherein the configuration information comprises at least one of:

a plurality of CG configurations, wherein the plurality of CG configurations comprise at least one CG configuration in the CG configuration group or the at least one CG configuration;

a CG configuration carrying the uplink control signaling;

an uplink control signaling enabling variable used to represent whether the uplink control signaling is carried in a CG PUSCH of a CG configuration associated with the uplink control signaling;

at least one CG configuration jointly indicated via the uplink control signaling;

a first time window indicated via the uplink control signaling;

a quantity or a maximum quantity of CG PUSCH transmission occasions in at least one CG configuration jointly indicated via the uplink control signaling;

an uplink control signaling joint indication identifier used to represent whether a CG configuration where the uplink control signaling joint indication identifier is located supports an uplink control signaling joint indication;

first indication information used to indicate that the uplink control signaling indicates usages of CG PUSCH transmission occasions in a first type of CG configuration, wherein the first type comprises a Type 1 CG and/or a Type 2 CG;

second indication information used to indicate that the uplink control signaling indicates usages of CG PUSCH transmission occasions in CG configurations associated with a same logical channel;

third indication information used to indicate related information of CG PUSCH transmission occasions of which usages are indicated via the uplink control signaling; or

a priority corresponding to the at least one CG configuration.

41. The network-side device according to claim 40, wherein the related information of the CG PUSCH transmission occasions of which the usages are indicated via the uplink control signaling indicates at least one of:

that time-domain resources of the CG PUSCH transmission occasions overlap;

that frequency-domain resources of the CG PUSCH transmission occasions overlap; or

that spatial-domain resources of the CG PUSCH transmission occasions overlap.

42. The network-side device according to claim 35 or 40, wherein the priority corresponding to the at least one CG configuration comprises:

a physical layer priority of the at least one CG configuration;

a priority of a logical channel associated with the at least one CG configuration;

a dedicated priority of the uplink control signaling;

a dedicated priority of a CG configuration jointly indicated via the uplink control signaling.

43. An apparatus for sending uplink control signaling, comprising:

an indicating module, configured to indicate, via an uplink control signaling, usages of configured grant physical uplink shared channel (CG PUSCH) transmission occasions in a CG configuration group or at least one CG configuration;

wherein the CG configuration group comprises at least one CG configuration, and an association relationship exists among the at least one CG configuration.

44. An apparatus for sending uplink control signaling, comprising:

a sending module, configured to send an uplink control signaling to a terminal;

wherein the uplink control signaling is used to indicate usages of configured grant physical uplink shared channel (CG PUSCH) transmission occasions in a CG configuration group or at least one CG configuration; the CG configuration group comprises the at least one CG configuration, and an association relationship exists among the at least one CG configuration.

45. A processor-readable storage medium, having stored therein a computer program, wherein the computer program is configured to cause a processor to execute the method according to any one of claims 1 to 11.

46. A processor-readable storage medium, having stored therein a computer program, wherein the computer program is configured to cause a processor to execute the method according to any one of claims 12 to 21.

indicating, via uplink control signaling, usages of CG PUSCH transmission occasions in a CG configuration group or in at least one CG configuration; where the CG configuration group includes the at least one CG configuration, and an association relationship exists among the at least one CG configuration

100

Fig.1

Fig.2

Fig.3

Fig.4

Fig.5

Fig.6

sending uplink control signaling to a terminal, where the uplink control signaling is used to indicate usages of CG PUSCH transmission occasions in a CG configuration group or in at least one CG configuration; the CG configuration group includes the at least one CG configuration, and an association relationship exists among the at least one CG configuration

700

Fig.7

Fig.8

EP 4 761 424 A1

Fig.9

Fig.10

Fig.11

52

## INTERNATIONAL SEARCH REPORT

| International application No. |
| --- |
| **PCT/CN2024/108911** |

**A. CLASSIFICATION OF SUBJECT MATTER**

H04W72/21(2023.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; 3GPP: 上行控制信令, 指示, 配置, 组, 授权, 使用, 未使用, 关联, 优先级, 类型, 时间窗, 上行共享信道, 排序, UCI, UTO, configuration, indication, use, unuse, type, CG, PUSCH, association, period, index

**C. DOCUMENTS CONSIDERED TO BE RELEVANT**

| Category* | Citation of document, with indication, where appropriate, of the relevant passages | Relevant to claim No. |
| --- | --- | --- |
| PX | WO 2024106463 A1 (NTT DOCOMO, INC.) 23 May 2024 (2024-05-23) description, paragraphs [0197]-[0277] | 1-46 |
| X | CATT. "Design of Multiple CG Occasions" 3GPP tsg_ran\wg1_rl1, R1-2302718, No. tsgr1_112b-e, 07 April 2023 (2023-04-07), sections 1 and 4-6 | 1-46 |
| X | HUAWEI et al. "Discussion on CG Enhancements for XR Capacity" 3GPP tsg_ran\wg1_rl1, R1-2300123, 17 February 2023 (2023-02-17), sections 1-2 | 1-46 |
| A | CN 113498203 A (CHINA MOBILE COMMUNICATION CO., LTD., RESEARCH INSTITUTE et al.) 12 October 2021 (2021-10-12) entire document | 1-46 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 September 2024** | **27 September 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/108911**

| Patent document cited in search report | | | Publication date (day/month/year) | Patent family member(s) | | | Publication date (day/month/year) |
|---|---|---|---|---|---|---|---|
| WO | 2024106463 | A1 | 23 May 2024 | None | | | |
| CN | 113498203 | A | 12 October 2021 | CN | 113498203 | B | 24 November 2023 |
| | | | | WO | 2021204183 | A1 | 14 October 2021 |

Form PCT/ISA/210 (patent family annex) (July 2022)

## EP 4 761 424 A1

### REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311012656